# EUROPÄISCHE PATENTSCHRIFT

(11) **EP 3 582 981 B1**
(45) Veröffentlichungstag und Bekanntmachung des Hinweises auf die Patenterteilung: **23.03.2022**
(21) Anmeldenummer: 18703741.1
(22) Anmeldetag: 02.02.2018
(51) Int. Cl.: B60D 1/00, H04L 12/40, B60Q 1/30

(54) **KUPPLUNGSSTEUERMODUL FÜR EINE ANHÄNGEKUPPLUNG**
COUPLING CONTROL MODULE FOR A TRAILER COUPLING
MODULE DE COMMANDE D'ATTELAGE POUR UN ATTELAGE DE REMORQUE

(30) Priorität: 14.02.2017 DE 102017102927; 11.12.2017 DE 102017129455
(43) Veröffentlichungstag der Anmeldung: 25.12.2019
(73) Patentinhaber: WESTFALIA - Automotive GmbH, 33378 Rheda-Wiedenbrück (DE)
(72) Erfinder: BEUTIN, Jörg, 33332 Gütersloh (DE); KRANZ, Torsten, 59590 Geseke (DE); PASCHER, Nikolas, 33335 Gütersloh (DE)
(74) Vertreter: Patentanwälte Bregenzer und Reule Partnerschaftsgesellschaft mbB
(86) Internationale Anmeldenummer: PCT/EP2018/052626
(87) Internationale Veröffentlichungsnummer: WO 2018/149662

(56) Entgegenhaltungen:
- EP-A1- 1 702 802
- EP-A1- 2 186 684
- EP-A1- 2 502 762
- EP-A1- 2 602 133
- EP-A1- 2 801 487
- EP-A1- 2 949 490
- DE-U1-202011 100 493
- DE-U1-202011 100 844

## Beschreibung

Die Erfindung betrifft ein Kupplungssteuermodul für eine Anhängekupplung zum Anschluss an ein Bordnetz eines Kraftfahrzeugs, wobei anhand der Anhängekupplung ein Anhänger an das Kraftfahrzeug angehängt werden kann, wobei das Kupplungssteuermodul mindestens eine elektrische Funktion der Anhängekupplung ansteuert und/oder überwacht, wobei das Kupplungssteuermodul eine Busschnittstelle zur Verbindung mit einem digitalen Bus des Bordnetzes des Kraftfahrzeugs, insbesondere einem CAN-Bus, aufweist, wobei das Kupplungssteuermodul über die Busschnittstelle Busnachrichten an mindestens ein an den Bus angeschlossenes Kraftfahrzeugbusmodul des Kraftfahrzeugs senden und Busnachrichten des mindestens einen Kraftfahrzeugbusmoduls empfangen kann.

In DE 20 2011 100 844 U1, DE 20 2000 100 493 sowie EP 1 702 802 A1 ist jeweils eine Bus-Kommunikation zwischen einem Zugfahrzeug und einem daran angekoppelten Anhänger beschrieben.

Die Anhängekupplung gemäß der Erfindung umfasst beispielsweise einen Kupplungsarm, an dessen freiem Endbereich ein Kuppelstück zum Ankuppeln eines Anhängers, beispielweise eine Kupplungskugel, angeordnet ist. Im einfachsten Fall wird eine Anhängersteckdose der Anhängekupplung, in die ein Stecker des Anhängers einsteckbar ist, lediglich an das mit elektrischem Strom versorgende Bordnetz des Kraftfahrzeugs angeschlossen. Üblicherweise werden jedoch Kupplungssteuermodule verwendet, die beispielsweise die Anhängersteckdose ansteuern. Über die Stromversorgung der Anhängersteckdose kann beispielsweise die Beleuchtungsanlage des Anhängers angesteuert werden. Bei modernen Kraftfahrzeugen kommunizieren die steuernden und überwachenden Komponenten über einen digitalen Bus, beispielsweise einen CAN-Bus, an den das Kupplungssteuermodul vorzugsweise anschließbar ist.

Damit ein derartiges Kupplungssteuermodul im Bordnetz aktiv angemeldet wird, sind üblicherweise andere Busmodule des Kraftfahrzeugs, die an den digitalen Bus angeschlossen sind, einzurichten. Üblicherweise werden diese weiteren Kraftfahrzeugbusmodule, die beispielsweise zur Ansteuerung der Heckbeleuchtung des Kraftfahrzeugs dienen, mit denen ein Fahrstabilitätsprogramm des Kraftfahrzeugs gesteuert wird oder dergleichen, in der Werkstatt codiert. Dabei wird an eine spezielle Diagnoseschnittstelle ein Programmiergerät angeschlossen, mit dem dann die entsprechenden Konfigurationskennungen bei den Kraftfahrzeugbusmodulen codiert werden. Dann reagieren diese beispielsweise auf Nachrichten des Kupplungssteuermoduls, nämlich beispielsweise ob ein Anhänger an die Anhängersteckdose angeschlossen ist. Dementsprechend wird beispielsweise ein Fahrstabilitätsprogramm dann bei einem Anhängerbetrieb anders arbeiten als ohne Anhänger.

Es ist daher die Aufgabe der vorliegenden Erfindung, ein verbessertes Kupplungssteuermodul sowie ein entsprechendes Verfahren für ein Kupplungssteuermodul bereitzustellen.

Zur Lösung der Aufgabe ist bei einem Kupplungssteuermodul der eingangs genannten Art vorgesehen, dass das Kupplungssteuermodul zum Senden mindestens einer Konfiguration-Busnachricht an das mindestens eine Kraftfahrzeugbusmodul über die Busschnittstelle ausgestaltet ist, wobei die Konfiguration-Busnachricht eine Konfigurationskennung zum Eintragen in Konfigurationsdaten des Kraftfahrzeugbusmoduls enthält, wobei die Konfigurationskennung dafür vorgesehen ist, dass das mindestens eine Kraftfahrzeugbusmodul beim Weiterbetrieb des Kraftfahrzeugs anhand der erhaltenen Konfigurationskennung mindestens eine Funktion in Abhängigkeit von dem Vorhandensein der Anhängekupplung, insbesondere dem Kupplungssteuermodul, und/oder dem Kupplungssteuermodul und/oder von dem Kupplungssteuermodul erhaltenen Busnachrichten ausführen kann.

Ferner ist zur Lösung der Aufgabe ein Verfahren zum Einbinden eines Kupplungssteuermoduls einer Anhängekupplung in ein Bordnetz eines Kraftfahrzeugs vorgesehen, wobei anhand der Anhängekupplung ein Anhänger an das Kraftfahrzeug angehängt werden kann, wobei das Kupplungssteuermodul mindestens eine elektrische Funktion der Anhängekupplung ansteuert und/oder überwacht, wobei das Kupplungssteuermodul eine Busschnittstelle zur Verbindung mit einem digitalen Bus, insbesondere einem CAN-Bus, des Bordnetzes des Kraftfahrzeugs aufweist, wobei das Kupplungssteuermodul über die Busschnittstelle Busnachrichten an mindestens ein an den Bus angeschlossenes Kraftfahrzeugbusmodul des Kraftfahrzeugs senden und Busnachrichten des mindestens einen Kraftfahrzeugbusmoduls empfangen kann. Das Verfahren sieht vor:
- Senden mindestens einer Konfiguration-Busnachricht an das mindestens eine Kraftfahrzeugbusmodul über die Busschnittstelle durch das Kupplungssteuermodul, wobei die Konfiguration-Busnachricht eine Konfigurationskennung zum Eintragen in Konfigurationsdaten des Kraftfahrzeugbusmoduls enthält, wobei die Konfigurationskennung dafür vorgesehen ist, dass das mindestens eine Kraftfahrzeugbusmodul beim Weiterbetrieb des Kraftfahrzeugs anhand der erhaltenen Konfigurationskennung mindestens eine Funktion in Abhängigkeit von dem Vorhandensein der Anhängekupplung, insbesondere dem Kupplungssteuermodul, und/oder von dem Kupplungssteuermodul erhaltenen Busnachrichten ausführen kann.

Ein erfindungsgemäßes Computerprogrammprodukt, beispielsweise ein Kommunikationsmodul oder Konfigurationsmodul, weist Programmcode und/oder Befehle auf, welcher durch einen Prozessor des Kupplungssteuermoduls oder eines Kupplungssteuermoduls für eine Anhängekupplung zum Anschluss an ein Bordnetz eines Kraftfahrzeugs ausführbar ist oder sind und dabei die erfindungsgemäßen Verfahrensschritte durchführt. Das Kupplungssteuermodul oder der Computer führt sozusagen das Verfahren entsprechend der Vorgaben oder des Programmcodes des Computerprogrammprodukts durch. Somit kann das Verfahren sozusagen durch eine Software oder ein Computerprogramm verkörpert oder implementiert sein, das dadurch durchgeführt wird, dass ein Prozessor des Kupplungssteuermoduls den Programmcode oder die Befehle des Computerprogramms ausführt.

Es ist ein Grundgedanke der vorliegenden Erfindung, dass das Kupplungssteuermodul sozusagen selbst die Konfiguration der übrigen Busmodule des Kraftfahrzeugs vornimmt, so dass diese dann im Verbund mit dem Kupplungssteuermodul optimal arbeiten können. Eine Funktionalität eines jeweiligen Kraftfahrzeugbusmoduls, welches die Konfigurationskennung durch das Kupplungssteuermodul erhalten hat, ist gegenüber dem Zustand ohne die Konfigurationskennung verändert. Dies bedeutet allerdings nicht, dass das Kraftfahrzeugbusmodul sozusagen stets auf Anhängerbetrieb geschaltet ist, sondern dass es auf den Anhängerbetrieb abgestimmte Funktionen leisten kann, wenn tatsächlich ein Anhänger an das Kraftfahrzeug angehängt ist und/oder die Anhängekupplung genutzt ist.

Die Konfigurationskennung ist oder umfasst zweckmäßigerweise eine Kodierung des mindestens einen Kraftfahrzeugbusmoduls für einen Anhängerbetrieb und/oder für ein Vorhandensein einer Anhängekupplung. Beispielsweise wird bei einem Kraftfahrzeugbusmodul, welches für eine Fahrzeugstabilisierung des Fahrzeugs vorgesehen ist, also beispielsweise einem sogenannten ESP-Steuermodul, ein Programm für einen Anhängerbetrieb aktiviert. Wenn ein Anhänger an das Kraftfahrzeug angehängt ist, wird beispielsweise eine andere Fahrstabilitätsregelung durch das Kraftfahrzeugbusmodul realisiert als ohne an das Kraftfahrzeug angehängten Anhänger. Die Konfigurationskennung aktiviert also sozusagen das Stabilitätsprogramm für den Anhängerbetrieb grundsätzlich. Eine anschließende Melde-Busnachricht des Kupplungssteuermoduls an das Kraftfahrzeugbusmodul für die Fahrstabilisierung, dass ein Anhänger angehängt ist oder nicht, veranlasst das Kraftfahrzeugbusmodul dazu, das Stabilitätsprogramm für den Anhängerbetrieb auszuführen oder ein Stabilitätsprogramm ohne Anhängerbetrieb auszuführen. Ohne eine erfindungsgemäße Konfiguration würde das Kraftfahrzeugbusmodul für die Fahrstabilität das Stabilitätsprogramm für den Anhängerbetrieb gar nicht erst ausführen, selbst wenn es die Melde-Busnachricht über den angehängten Anhänger von dem Kupplungssteuermodul erhielte. Beispielsweise würde das Kraftfahrzeugbusmodul diese Melde-Busnachricht ignorieren oder nicht verstehen.

Die Konfiguration-Busnachricht ist vorteilhaft eine von den sonstigen Busnachrichten verschiedene Busnachricht. Bei den sonstigen Busnachrichten handelt es sich beispielsweise um Melde-Busnachrichten des Kupplungssteuermoduls, Steuer-Busnachrichten des Kupplungssteuermoduls oder dergleichen. Es ist weiterhin möglich, dass die von der Konfiguration-Busnachricht verschiedenen sonstigen Busnachrichten Nachrichten sind, die mindestens ein Kraftfahrzeugbusmodul an das Kupplungssteuermodul sendet oder von dem Kupplungssteuermodul empfängt, beispielsweise zur Ansteuerung des Kupplungssteuermoduls oder zum Empfang von Informationen oder Meldungen des Kupplungssteuermoduls, oder mindestens eine derartige Busnachricht enthalten.

Die Konfiguration-Busnachricht kann man auch als eine Parametrierung-Busnachricht bezeichnen. Die Konfiguration-Busnachricht dient dazu, das Kraftfahrzeugbusmodul auf einen Anhängerbetrieb und/oder auf eine Kommunikation mit dem Kupplungssteuermodul einzustellen. Die mindestens eine Konfigurationskennung enthält beispielsweise die Information "Anhängekupplung am Kraftfahrzeug vorhanden" oder "Kupplungssteuermodul einer Anhängekupplung an den digitalen Bus angeschlossen".

Die Konfiguration-Busnachricht ist eine von einer Melde-Busnachricht des Kupplungssteuermoduls verschiedene Nachricht oder keine Melde-Busnachricht des Kupplungssteuermoduls. Eine Melde-Busnachricht des Kupplungssteuermoduls wird von dem Kupplungssteuermodul auf dem digitalen Bus versendet. Die oder eine Melde-Busnachricht enthält insbesondere eine Information aus dem Umfeld der Anhängekupplung, beispielsweise deren Nutzung, ein Winkelsignal eines Sensors der Anhängekupplung oder dergleichen, an mindestens ein Kraftfahrzeugbusmodul oder die Kraftfahrzeugbusmodule.

Die Konfiguration-Busnachricht ist vorzugsweise ausschließlich zur Konfiguration des mindestens einen Kraftfahrzeugbusmoduls vorgesehen. Die Konfiguration, Busnachricht enthält außer der Konfigurationskennung vorteilhaft keine Meldeinformation und oder Steuerinformation des Kupplungssteuermoduls, wobei die Meldeinformation beispielsweise ein Sensorsignal aus dem Umfeld der Anhängekupplung umfasst oder enthält. Die Steuerinformation dient beispielsweise zur Ansteuerung des mindestens ein Kraftfahrzeugmoduls in Abhängigkeit von einer Nutzung der Anhängekupplung durch einen Anhänger und/oder einen Anhängerstecker.

Die Konfiguration-Busnachricht enthält abgesehen von der Konfigurationskennung vorteilhaft keine Information zur Ausgabe an einem Ausgabemittel des Kraftfahrzeugs und/oder zum Ansteuern des mindestens einen Kraftfahrzeugbusmoduls. Bei dem Ausgabemittel handelt es sich um ein Ausgabemittel, welches fest am Kraftfahrzeug angeordnet ist und nicht um ein Diagnosemittel, welches lösbar an das Kraftfahrzeug anschließbar ist, beispielsweise einen Diagnose-Computer oder ein sonstiges Ausgabe Gerät, welches an eine sogenannte Onboard-Schnittstelle oder OBD-Schnittstelle anschließbar ist. Das Ausgabemittel umfasst beispielsweise einen Lautsprecher oder ein Display, welches fest am Kraftfahrzeug angeordnet ist. Die Information umfasst beispielsweise eine Information betreffend die Nutzung einer Anhängersteckdose und/oder eine Steuerinformation, beispielsweise um eine Rückfahrsensorik des Kraftfahrzeugs abzuschalten.

Bei dem mindestens einen Kraftfahrzeugbusmodul kann es sich beispielsweise um ein Steuermodul für die Steuerung einzelner Funktionen, beispielsweise der Heckleuchten, einer Heckraumüberwachung oder dergleichen handeln. Es kann sich bei dem Kraftfahrzeugbusmodul auch um ein Gateway handeln, welches seinerseits wiederum mehrere, beispielsweise zwei oder weitere, Kraftfahrzeugbusmodule bedient. So kann beispielsweise dieses Gateway dann Nachrichten vom Kupplungssteuermodul an die an es angeschlossenen Kraftfahrzeugbusmodule weiterleiten.

Beispielsweise handelt es sich bei der Konfigurationskennung um eine Kennung, die das Vorhandensein des Kraftfahrzeugbusmoduls oder der Anhängekupplung oder beiden bei den Kraftfahrzeugbusmodulen sozusagen festlegt.

So können dann beispielsweise die Kraftfahrzeugbusmodule Busnachrichten an das Kupplungssteuermodul adressieren, mit denen dieses wiederum dann die Funktionen der Anhängekupplungen bedient. Beispielsweise kann das Kupplungssteuermodul in Abhängigkeit von derartigen Busnachrichten eine Anhängersteckdose ansteuern. Wenn umgekehrt jedoch beispielsweise die Anhängersteckdose belegt ist, sendet das Kupplungssteuermodul auf dem digitalen Bus des Kraftfahrzeugs Busnachrichten, die die Belegung der Steckdose signalisieren. Auf diesem Wege kann dann beispielsweise ein Kraftfahrzeugbusmodul, welches eine Fahrzeugstabilisierung realisiert, beispielsweise ein sogenanntes ESP-Modul, auf die veränderte Lastsituation reagieren und das Kraftfahrzeug entsprechend elektronisch steuern, um einen effektiven Schleuderschutz zu realisieren.

Vorzugsweise ist vorgesehen, dass die Konfigurationskennung dafür vorgesehen ist, dass das mindestens eine Kraftfahrzeugbusmodul Steuer-Busnachrichten und/oder Melde-Busnachrichten des Kupplungssteuermoduls auswertet oder in einer Funktion als Gateway an mindestens ein mit dem Kraftfahrzeugbusmodul verbundenes, beispielsweise über den Bus verbundenes, Kraftfahrzeugsteuermodul oder Kraftfahrzeugbusmodul weiterleitet. Ein Kraftfahrzeugsteuermodul dient beispielsweise zur Überwachung und/oder Ansteuerung von Funktionen des Kraftfahrzeugs, insbesondere einer Beleuchtungseinrichtung, einer Abstandsmesseinrichtung oder dergleichen. Bei den Steuer-Busnachrichten kann es sich beispielsweise um eine Abschalte-Steuerung handeln, mit der beispielsweise das Kupplungssteuermodul die Funktion einer Abstandsmessvorrichtung im Heckbereich des Kraftfahrzeugs abschaltet. Bei der Melde-Busnachricht handelt es sich beispielsweise um eine Belegungskennung der Anhängersteckdose oder eine Nutzungsinformation des Kupplungsarms.

Zweckmäßigerweise ist vorgesehen, dass das Kupplungssteuermodul zum Empfangen einer Konfigurationsinformation-Busnachricht von dem mindestens einen Kraftfahrzeugbusmodul ausgestaltet ist. Die Konfigurationsinformation-Busnachricht enthält eine Information darüber, ob in den Konfigurationsdaten des mindestens einen Kraftfahrzeugbusmoduls die Konfigurationskennung enthalten ist. Beispielsweise ist es möglich, dass die Kraftfahrzeugbusmodule oder mindestens eines davon sozusagen spontan immer wieder Informationen senden oder sendet, welche seine Konfigurationsdaten enthalten. Daraus kann das Kupplungssteuermodul dann entnehmen, ob die Konfigurationskennung für den Betrieb mit Anhänger grundsätzlich schon bei dem sendenden Kraftfahrzeugbusmodul konfiguriert / programmiert ist oder nicht.

Eine derartige Nachricht eines Kraftfahrzeugbusmoduls kann das Kupplungssteuermodul vorzugsweise dazu nutzen, dass es die Konfiguration-Busnachricht in Abhängigkeit davon an das Kraftfahrzeugbusmodul sendet, ob in dessen Konfigurationsdaten die Konfigurationskennung enthalten ist. So wird sichergestellt, dass das Kupplungssteuermodul nur dann die Konfigurationskennung an ein jeweiliges Kraftfahrzeugbusmodul versendet, welches tatsächlich auch die Konfigurationskennung braucht. Ein unnötiger Datenverkehr oder Programmieraufwand wird vermieden.

Erwähnt wurde bereits, dass prinzipiell ein Kraftfahrzeugbusmodul eine Information über seine jeweilige Konfiguration sozusagen von selbst oder ohne Veranlassung und/oder zyklisch oder dergleichen versenden kann. Vorzugsweise ist jedoch vorgesehen, dass das Kupplungssteuermodul sozusagen aktiv überprüft, ob die Konfiguration für den Anhängerbetrieb bei dem Kraftfahrzeugbusmodul oder den Kraftfahrzeugbusmodulen vorgenommen ist oder nicht.

Vorzugsweise ist vorgesehen, dass das Kupplungssteuermodul zum Senden einer Abfrage-Busnachricht über den digitalen Bus des Kraftfahrzeugs ausgestaltet ist, mit der das Kupplungssteuermodul bei dem mindestens einen Kraftfahrzeugbusmodul und/oder mehreren an den Bus angeschlossenen Kraftfahrzeugbusmodulen die Konfigurationsinformation-Busnachricht abfragt. Mithin ist es also möglich, dass das Kupplungssteuermodul mit einer sogenannten Broadcast-Nachricht bei mehreren Kraftfahrzeugbusmodulen abfragt, ob sie konfiguriert sind oder nicht. Es ist aber auch möglich, dass beispielweise in den Konfigurationsdaten des Kupplungssteuermoduls oder sonstigen Programminformationen, zum Beispiel im Programmcode eines entsprechenden Konfigurationsmoduls oder Kommunikationsmoduls, abgelegt ist, welche Kraftfahrzeugbusmodule zu überprüfen sind. Somit kann das Kupplungssteuermodul an mindestens ein Kraftfahrzeugbusmodul oder mehrere Kraftfahrzeugbusmodule dediziert eine Abfrage-Busnachricht senden, in der dann beispielsweise eine Busadresse des Kraftfahrzeugbusmoduls als Zieladresse angegeben ist.

An dieser Stelle sei aber erwähnt, dass es grundsätzlich auch möglich ist, dass das Kupplungssteuermodul ohne vorherige Abfrage einer Konfigurationskennung bei einem Kraftfahrzeugbusmodul oder auch ohne Kenntnis darüber, ob ein jeweiliges Kraftfahrzeugbusmodul bereits konfiguriert ist bzw. die Konfigurationskennung enthält, die Konfiguration aktiv vornehmen kann. So ist es beispielsweise möglich, dass das Kupplungssteuermodul zyklisch oder anhand sonstiger Bedingungen die Konfiguration-Busnachricht an eines oder mehrere Kraftfahrzeugbusmodule versendet. Es kann zum Beispiel vorgesehen sein, dass das Kupplungssteuermodul bei jedem Start oder jeder Inbetriebnahme des Kraftfahrzeugs die Konfiguration mindestens eines Kraftfahrzeugbusmoduls vornimmt.

Erwähnt sei auch der Vollständigkeit halber, dass die Konfiguration-Busnachricht gezielt an ein jeweiliges Kraftfahrzeugbusmodul adressiert sein kann, so dass nur dieses die Nachricht empfängt bzw. darauf sensibel reagiert. Es ist aber auch möglich, dass in einer Art Broadcast-Nachricht mindestens zwei Kraftfahrzeugbusmodule oder mehrere Kraftfahrzeugbusmodule durch die Konfiguration-Busnachricht angesprochen werden, so dass diese die Konfigurationskennung in ihre jeweiligen Konfigurationsdaten übernehmen können.

Bevorzugt ist jedoch ein Prozess derart, dass das Kupplungssteuermodul zunächst überprüft, ob eine Konfigurationskennung zu versenden ist und diese dann erst versendet, wenn das jeweilige Kraftfahrzeugbusmodul nicht mit der Konfigurationskennung für den Anhängerbetrieb ausgestattet ist.

Beispielsweise ist es vorteilhaft, wenn das Kupplungssteuermodul dazu ausgestaltet ist, die Konfiguration-Busnachricht erst nach einem Abfragen und/oder Empfangen der Konfigurationsinformation-Busnachricht des mindestens einen Kraftfahrzeugbusmoduls zu versenden. Erst wenn das Kraftfahrzeugbusmodul sozusagen seine Konfiguration dem Kupplungssteuermodul mitgeteilt hat, wird es auch aktiv konfiguriert. Dabei spielt es keine Rolle, ob die Konfigurationsinformation-Busnachricht von dem Kraftfahrzeugbusmodul spontan gesendet wird oder es erst sozusagen danach gefragt werden muss, indem das Kupplungssteuermodul die Abfrage-Busnachricht sendet.

Das Kupplungssteuermodul kann die Konfiguration eines Kraftfahrzeugbusmoduls oder mehrerer Kraftfahrzeugbusmodule unter verschiedenen Randbedingungen sozusagen in Angriff nehmen.

Beispielsweise ist vorgesehen, dass das Kupplungssteuermodul zum Senden der Konfiguration-Busnachricht in Abhängigkeit von mindestens einer zeitlichen Bedingung ausgestaltet ist. So ist es beispielsweise möglich, dass das Kupplungssteuermodul innerhalb vorbestimmter oder einstellbarer zeitlicher Bedingungen zumindest die Abfrage-Busnachricht versendet, ggf. dann auch die Konfiguration-Busnachricht.

Eine weitere Bedingung kann ein Triggerereignis sein, beispielsweise eine jeweilige Inbetriebnahme des Kraftfahrzeugs. So kann beispielsweise vorgesehen sein, dass das Kupplungssteuermodul bei einem Starten des Antriebsmotors des Kraftfahrzeugs jeweils die Konfiguration-Busnachricht versendet, wobei beide Varianten möglich sind, nämlich das Senden der Konfiguration-Busnachricht ohne vorherige Abfrage der Konfigurationsinformation-Busnachricht und mit einer derartigen Abfrage.

Eine weitere Bedingung kann eine erstmalige Stromversorgung des Kupplungssteuermoduls sein. Wenn also das Kupplungssteuermodul bei sozusagen stromlosem Bordnetz in der Werkstatt oder in sonstiger Weise montiert wird, ist es sozusagen in einer Initialisierungssituation. Wenn dann erstmals Strom an das Kupplungssteuermodul gelangt bzw. Spannung angelegt wird, startet das Kupplungssteuermodul die Konfiguration der übrigen Kraftfahrzeugbusmodule.

Auch die Betätigung einer Bremse des Kraftfahrzeugs oder ein Schalten mindestens einer Leuchte des Kraftfahrzeugs oder des Anhängers oder beiden kann dazu dienen, dass das Kupplungssteuermodul die Konfiguration-Busnachricht sendet. Das kann auch spontan sein, d.h. das Kupplungssteuermodul die Konfigurationsinformation-Busnachricht, mit der die Kraftfahrzeugbusmodule ihre jeweiligen Konfigurationsdaten mitteilen, vorher nicht abfragt.

Weiterhin ist möglich, dass das Kupplungssteuermodul ein elektrisches Triggersignal und/oder eine Trigger-Busnachricht auswertet, bevor es die Konfiguration-Busnachricht sendet.

Es ist auch möglich, dass das Kupplungssteuermodul als Triggerereignis oder als sonstiges Ereignis, dass das Senden der Konfiguration-Busnachricht auslöst, beispielsweise eine bestimmte Bedienfolge auswertet. Beispielsweise ist es möglich, dass der Bediener das Licht des Kraftfahrzeugs oder eine vorbestimmte Leuchte des Kraftfahrzeugs gezielt ein und ausschaltet. So kann z.B. das Betätigen einer Bremse, welches letztlich auch zur Betätigung einer Bremsleuchte des Kraftfahrzeugs führt, vom Kupplungssteuermodul dazu ausgewertet werden, dass eine Kodierung eines oder mehrerer Kraftfahrzeugbusmodule notwendig ist.

Weiterhin kann das Triggersignal auch sein, dass das Kupplungssteuermodul einen Anhänger erkennt. Dies kann z.B. dadurch erkannt werden, dass die Anhängersteckdose belegt ist und dies vom Kupplungssteuermodul erkannt wird. Auch eine Belastung einer Kugelstange oder eines Kupplungsarms der Anhängekupplung kann vom Kupplungssteuermodul zur Ermittlung des Triggerereignisses und damit zum Senden der Konfiguration-Busnachricht ausgewertet werden.

Ohne weiteres sind auch Kombinationen davon möglich.

So ist es beispielsweise möglich, dass gleichzeitig die Bremse betätigt und eine vorbestimmte Lichtabfolge am Kraftfahrzeug zu schalten ist, was das Kupplungssteuermodul erkennt. Wenn also beispielsweise bei betätigter Bremse die Nebelschlussleuchte mehrfach eingeschaltet und ausgeschaltet wird, kann dies vom Kupplungssteuermodul als ein Triggersignal zur Kodierung bzw. zum Senden der Konfiguration-Busnachricht ausgewertet werden.

Eine bevorzugte Ausführungsform der Erfindung sieht vor, dass das Kupplungssteuermodul mindestens einen manuell betätigbaren elektrischen Bedienschalter zur Erzeugung des Triggersignals oder Triggerereignisses aufweist. So kann beispielsweise ein Tastschalter oder dergleichen vorgesehen sein, der vom Bediener betätigt wird, um das Kupplungssteuermodul Senden der Konfiguration-Busnachricht triggert oder ansteuert.

Es ist möglich, dass das Kupplungssteuermodul direkt mit dem Kraftfahrzeugbus bzw. dem digitalen Bus verbunden wird oder ist. Dazu kann beispielsweise eine Busverbindung aufgeschleift oder unterbrochen oder kontaktiert werden. Alternativ oder ergänzend ist es aber auch möglich, dass das Kupplungssteuermodul zur Verbindung mit einer Onboard-Diagnoseschnittstelle des Kraftfahrzeugs ausgestaltet ist. So kann beispielsweise ein Steckverbinder oder eine sonstige Verbindungsmöglichkeit oder Schnittstelle zur Verbindung mit einer Onboard-Diagnoseschnittstelle vorgesehen sein, mit der das Kupplungssteuermodul an den digitalen Bus des Kraftfahrzeugs ankoppelbar ist. Somit ist es nicht notwendig, eine spezielle Infrastruktur zum Anschluss des Kupplungssteuermoduls zu schaffen. Die bereits vorhandene Onboard-Diagnoseschnittstelle kann genutzt werden. Es ist beispielsweise möglich, dass das Kupplungssteuermodul einen Steckverbinder aufweist, in den seinerseits wiederum ein Diagnosegerät, beispielsweise in einer Kraftfahrzeugwerkstatt, anschließbar ist. Der Steckverbinder des Kupplungssteuermoduls ist also sandwichartig zwischen die Diagnoseschnittstelle des Kraftfahrzeugs und diesen Steckverbinder des Diagnosegeräts der Werkstatt geschaltet. Somit weist der Steckverbinder vorzugsweise Steckbuchsen zum Einstecken eines weiteren Steckers in die Onboard- Diagnoseschnittstelle auf.

Bevorzugt ist es, wenn das Kupplungssteuermodul eine Parametrierschnittstelle zur Parametrierung der Konfigurationskennung und/oder das mindestens eine Kraftfahrzeugmodul kennzeichnender und/oder betreffender und im Zusammenhang mit dem Versenden der Konfigurationskennung stehender Daten aufweist. So können beispielsweise über die Parametrierschnittstelle die Art und Ausgestaltung der jeweiligen Konfigurationskennung eingestellt werden. Weiterhin können beispielsweise Busadressen zu parametrierender Kraftfahrzeugbusmodule eingestellt werden. Es ist aber auch möglich, dass diese Parameter fest im Kupplungssteuermodul parametriert sind oder in der Software des Kupplungssteuermoduls abgelegt sind. Beispielsweise wird das Kupplungssteuermodul bereits ab Werk so eingestellt, dass es mit einem bestimmten Kraftfahrzeugtyp bzw. einer bestimmten Kraftfahrzeug-Baureihe zusammenwirken kann. Eine separate Kodierung oder Parametrierung ist nicht notwendig.

Die Parametrierschnittstelle kann beispielsweise eine USB-Schnittstelle oder dergleichen sein. Die Parametrierschnittstelle kann also eine drahtgebundene Schnittstelle und/oder eine drahtlose Schnittstelle umfassen. So ist beispielsweise auch eine Parametrierung über USB (Universal Serial Bus), per Funk, beispielsweise WLAN Wireless (Local Area Network) oder dergleichen, ohne weiteres möglich.

Vorteilhaft ist es, wenn das Kupplungssteuermodul zum Senden einer Schaltinformation an das mindestens eine Kraftfahrzeugbusmodul ausgestaltet ist, wobei das Kraftfahrzeugbusmodul anhand der Schaltinformation in einen Parametriermodus schaltbar ist, in welchem das Kraftfahrzeugbusmodul zur Parametrierung der Konfigurationskennung freigeschaltet ist. Wenn also das Kraftfahrzeugbusmodul an sich für eine Parametrierung nicht offen ist, sondern für einen normalen Fahrbetrieb eingestellt ist, kann das Kupplungssteuermodul eine entsprechende Initialisierungsnachricht oder Schaltinformation über den digitalen Bus an das Kraftfahrzeugbusmodul senden. Dies kann ohne weiteres bei mehreren Kraftfahrzeugbusmodulen funktionieren. So ist es beispielsweise möglich, dass in einer Broadcast-Nachricht mehrere Kraftfahrzeugbusmodule in den Parametriermodus bzw. Konfigurationsmodus geschaltet werden, in der das jeweilige Kraftfahrzeugbusmodul für die Konfiguration-Busnachricht bzw. zum Empfang der Konfigurationskennung bereit oder freigeschaltet oder sozusagen offen ist.

Weiterhin ist es vorteilhaft, wenn das Kupplungssteuermodul zum Senden mindestens einer Akzeptanzinformation zur Authentifizierung und/oder Identifizierung bei dem mindestens einen Kraftfahrzeugbusmodul ausgestaltet ist, wobei das Kraftfahrzeugbusmodul die Konfigurationskennung in Abhängigkeit von der Akzeptanzinformation in seine Konfigurationsdaten übernimmt. So können beispielsweise Authentifizierungsdaten oder Identifizierungsdaten, z.B. Passwort und Absenderkennung vom Kupplungssteuermodul an ein jeweils zu konfigurierendes Kraftfahrzeugbusmodul versendet werden. Damit wird sichergestellt, dass nur sozusagen autorisierte bzw. richtig eingestellte Kupplungssteuermodule eines oder mehrerer Kraftfahrzeugbusmodule konfigurieren können. Bevorzugt ist es, wenn das Kupplungssteuermodul Koppelmittel zur Ankopplung einer Anhängersteckdose, die zum Anstecken eines Steckverbinders des Anhängers vorgesehen ist, an das Bordnetz des Kraftfahrzeugs aufweist. Beispielsweise hat das Kupplungssteuermodul entsprechende leistungselektronische oder sonstige Ausgänge, an die die Anhängersteckdose ankuppelbar ist.

Weiterhin ist es vorteilhaft, wenn das Kupplungssteuermodul Steuermittel zum Ansteuern mindestens eines elektrischen Antriebs aufweist.

Der Antrieb kann beispielsweise für eine Fixiereinrichtung zum Fixieren der Anhängekupplung in mindestens einer Betriebsstellung, insbesondere einer Gebrauchsstellung, vorgesehen sein.

Der Antrieb kann auch zum Verstellen eines Kupplungsarms der Anhängekupplung zwischen einer zum Anhängen des Anhängers vorgesehenen Gebrauchsstellung und einer für einen Nichtgebrauch des Kupplungsarms vorgesehene Nichtgebrauchsstellung vorgesehen sein. Beispielsweise ist der Kupplungsarm in der Nichtgebrauchsstellung hinter einem Stoßfänger des Kraftfahrzeugs verborgen. Der Kupplungsarm ist zweckmäßigerweise zwischen der Gebrauchsstellung und der Nichtgebrauchsstellung schwenkbar und/oder verschieblich an einem Halter gehalten, der seinerseits wiederum an der Tragstruktur des Kraftfahrzeugs befestigt ist. Beispielsweise ist ein Träger oder Querträger am Heck des Kraftfahrzeugs vorgesehen, an dem der Halter für die Anhängekupplung bzw. den Kupplungsarm angeordnet ist.

Ohne weiteres ist es möglich, dass mehrere Antriebe vom Kupplungssteuermodul angesteuert werden, beispielsweise ein Antrieb für eine Fixiereinrichtung und ein Antrieb für eine Verstellung des Kupplungsarms zwischen der Gebrauchsstellung und der Nichtgebrauchsstellung.

Bevorzugt ist es, wenn das Kupplungssteuermodul zur Ausgabe einer Meldung, beispielsweise einer optischen und/oder akustischen Meldung, ausgestaltet ist, bis es nach einer ersten Inbetriebnahme die Konfigurationskennung an das mindestens eine Kraftfahrzeugbusmodul gesendet hat. So kann beispielsweise eine LED oder sonstige Leuchte vorgesehen sein, die signalisiert, dass das Kupplungssteuermodul mit der Konfiguration noch nicht begonnen hat oder diese noch nicht abgeschlossen hat. Somit ist eine hohe Sicherheit gewährleistet, dass nur bei sozusagen fertig konfiguriertem Kraftfahrzeugbus bzw. bei fertig konfigurierten Kraftfahrzeugbusmodulen das Kraftfahrzeug in Betrieb genommen wird.

Es ist weiterhin zweckmäßig, wenn das Kupplungssteuermodul zur Ermittlung, das mindestens ein Kraftfahrzeugbusmodul des Kraftfahrzeugs die Konfigurationskennung nicht erhalten hat, anhand einer Überwachung einer Buskommunikation auf dem Bus des Kraftfahrzeugs ausgestaltet ist. Wenn also beispielsweise eine Parksensorik eingeschaltet wird und das zugeordnete Heck-Kraftfahrzeugbusmodul sozusagen den Parkraum hinter dem Kraftfahrzeug überwacht, obwohl ein Anhänger angekuppelt ist, wertet das Kupplungssteuermodul die entsprechenden Nachrichten aus und startet den Konfigurationsmodus, sendet also beispielsweise die Konfiguration-Busnachricht an das Heck-Kraftfahrzeugbusmodul. Das Kupplungssteuermodul erkennt also, dass das Kraftfahrzeug sozusagen nicht weiß, dass eine Anhängekupplung angeschlossen und insbesondere das Kupplungssteuermodul im Verbund mit den anderen Kraftfahrzeugbusmodulen am digitalen Bus des Kraftfahrzeugs arbeiten sollte.

Nachfolgend werden Ausführungsbeispiele der Erfindung anhand der Zeichnung erläutert. Es zeigen:
- Figur 1: eine schematische Seitenansicht eines Kraftfahrzeugs mit einer Anhängekupplung gemäß der Erfindung,
- Figur 2: die Anhängekupplung des Kraftfahrzeugs gemäß Figur 1 mit einem Kupplungssteuermodul sowie angeschlossenen Kraftfahrzeugbusmodulen in schematischer Darstellung,
- Figur 3: ein schematisches Ablaufdiagramm für eine Fahrzeugkodierung,
- Figur 4: ein etwas detailliertes Diagramm betreffend eine Fahrzeugkodierung,
- Figur 5: eine Kommunikation zwischen dem Kupplungssteuermodul gemäß Figuren 1, 2 und einem Kraftfahrzeugbusmodul in Zusammenhang mit einer Kodierung.

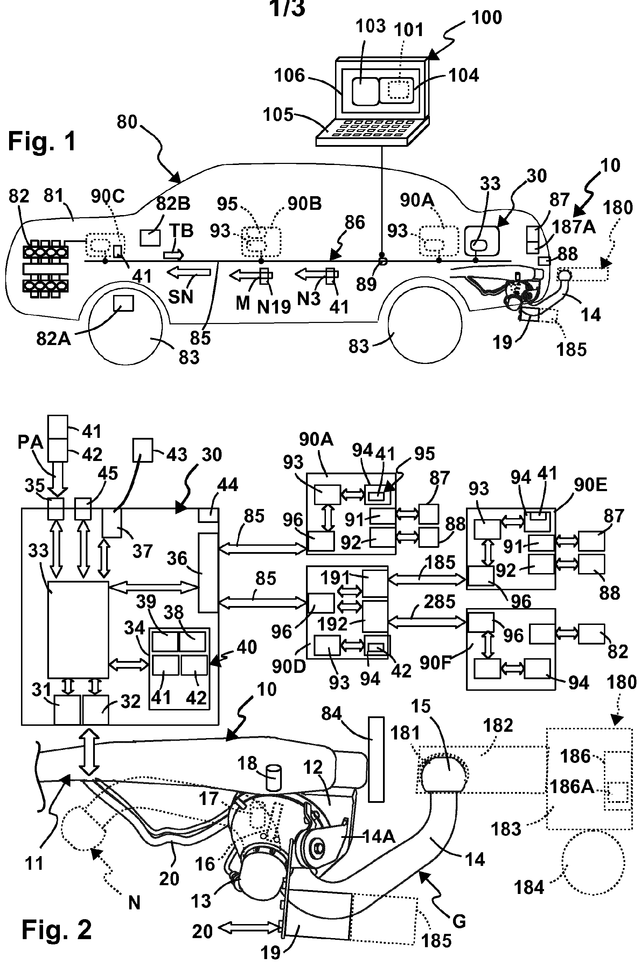

Ein Kraftfahrzeug 80 mit einer Karosserie 81 ist durch einen Motor 82, beispielsweise einen Elektromotor, einen Verbrennungsmotor oder eine Kombination davon, angetrieben. Der Motor 82 treibt in an sich bekannter Weise Räder 83 an. An das Kraftfahrzeug 80 kann ein Anhänger 180 anhand einer Anhängekupplung 10 angehängt werden. Die Anhängekupplung 10 umfasst beispielsweise eine Trägeranordnung 11, die an der Karosserie 81 des Kraftfahrzeugs 80 befestigt ist, beispielsweise verschraubt, verschweißt oder dergleichen. An der Trägeranordnung 11, insbesondere einem Querträger derselben, ist ein Halter 12 der Anhängekupplung 10 befestigt, welcher beispielsweise zu einem festen Halten eines Kupplungsarms 14 ausgestaltet ist oder eine Steckaufnahme (nicht dargestellt) zum Einstecken eines Kupplungsarms 14 aufweisen kann. Vorliegend ist jedoch am Halter 12 ein Lager 13, insbesondere ein Schwenklager, Schiebelager oder Schwenk-Schiebelager vorgesehen, mit dem der Kupplungsarm 14 zwischen einer in durchgezogenen Linien in Figur 2 dargestellten Gebrauchsstellung G und einer in gestrichelten Linien dargestellten Nichtgebrauchsstellung N verstellbar ist.

Der Kupplungsarm 14 trägt an seinem freien Ende eine Kupplungskugel 15, die exemplarisch für andersartige Kuppelelemente, beispielsweise polygonale Kuppelelemente oder dergleichen steht. Die Kupplungskugel 15 und der die Kupplungskugel 15 tragende Abschnitt des Kupplungsarms 14 ist in der Gebrauchsstellung G vor einen Stoßfänger 84 vorverstellt, so dass der Anhänger 180 ankuppelbar ist. Beispielsweise ist eine Zugkugelkupplung 181 des Anhängers 180, welche an einer Deichsel 182 angeordnet ist, an das Kuppelelement bzw. die Kupplungskugel 15 ankuppelbar. Der Anhänger 180 weist einen Grundkörper 183, beispielsweise eine Lademulde, einen Wohnwagenaufbau oder dergleichen, auf, der auf Rädern 184 auf einem Untergrund rollbar ist. Der Anhänger 180 weist weiterhin einen Steckverbinder 185 auf, über den eine Beleuchtungseinrichtung 186 des Anhängers 180 mit Strom versorgbar ist. Im Einzelnen nicht dargestellte Leuchten, beispielsweise Heckleuchten, Bremsleuchten, Blinker oder dergleichen, der Beleuchtungseinrichtung 186 können über eine entsprechende Ansteuerung bzw. Bestromung des Steckverbinders 185, der vorzugsweise individuelle Kontakte aufweist, mit Strom versorgt und angesteuert werden.

Der Kupplungsarm 14 ist anhand einer Fixiereinrichtung 16 zumindest in der Gebrauchsstellung G fixierbar, beispielsweise formschlüssig fixierbar und/oder verklemmbar. Zum Lösen der Fixiereinrichtung 16 ist zweckmäßigerweise ein Antrieb 17 vorgesehen, der aber auch zum Schließen bzw. Verriegeln der Fixiereinrichtung 16 ausgestaltet sein kann. Zweckmäßigerweise ist die Fixiereinrichtung 16 in die den Kupplungsarm 14 in der Gebrauchsstellung G verriegelnde Stellung federbelastet, so dass der Antrieb 17 einen Löseantrieb darstellt.

Weiterhin ist der Kupplungsarm 14 anhand eines Antriebs 18 zwischen der Gebrauchsstellung G und der Nichtgebrauchsstellung N antreibbar.

Zum Einstecken des Steckverbinders 185 des Anhängers 180 dient eine Anhängersteckdose 19. Diese kann beispielsweise am Kupplungsarm 14 oder einem separaten Halter 14a angeordnet sein.

Das Kraftfahrzeug 80 weist ein Bordnetz 86 mit einem digitalen Bus 85, beispielsweise einem CAN-Bus auf. An den Bus 85 sind Kraftfahrzeugbusmodule 90A, 90B, 90C, 90D, 90E, 90F angeschlossen, die nachfolgend teilweise auch allgemein als "Kraftfahrzeugbusmodule 90" bezeichnet werden. Beispielsweise handelt es sich bei dem Kraftfahrzeugbusmodul 90C um ein Motorsteuergerät zur Ansteuerung des Motors 82. Das Kraftfahrzeugbusmodul 90B wiederum ist ein Steuergerät für ein Fahrstabilitätsprogramm des Kraftfahrzeugs 80. Das Kraftfahrzeugbusmodul 90A steuert beispielsweise eine Beleuchtungseinrichtung 87 des Kraftfahrzeugs 80 sowie eine Abstandsmesseinrichtung 88 für einen Heckbereich bzw. einen Bewegungsraum hinter dem Kraftfahrzeug 80 (in Fahrtrichtung hinten) an. Beispielsweise umfasst die Beleuchtungseinrichtung 87 Bremsleuchten, Heck-Fahrbeleuchtungseinrichtungen, Rückfahrscheinwerfer, Blinkleuchten oder dergleichen. Die Abstandsmesseinrichtung 88 weist beispielsweise berührungslos arbeitende Abstandssensoren, insbesondere Ultraschallsensoren, auf.

Die Anhängersteckdose 19 sowie die Antriebe 17, 18 sind über die Leitungsanordnung 20 mit einem Kupplungssteuermodul 30 verbunden. In Figur 2 ist dies bezüglich der Anhängersteckdose 19 lediglich durch einen Doppelpfeil angedeutet. Das Kupplungssteuermodul 30 steuert über die Leitungsanordnung 20 die Funktionen der Anhängekupplung 10 an, beispielsweise die jeweiligen Anschlusskontakte der Anhängersteckdose 19 und/oder den Antrieb 17 und/oder den Antrieb 18. So kann beispielsweise anhand des Kupplungssteuermoduls 30 der Antrieb 17 zum Lösen der Fixiereinrichtung 16 und der Antrieb 18 zum Schwenken oder Verstellen des Kupplungsarms 14 zwischen der Gebrauchsstellung G und der Nichtgebrauchsstellung N angesteuert werden. Eine entsprechende Leistungselektronik, insbesondere für die Antriebe 17 und 18, ist als eine Schnittstelle 31, also ein Steuermittel, in der Figur 2 angedeutet.

Eine Schnittstelle 32 ist für die Anhängersteckdose 19 vorgesehen. Die Schnittstelle 32 bildet ein Koppelmittel zur Ankopplung der Anhängersteckdose 19.

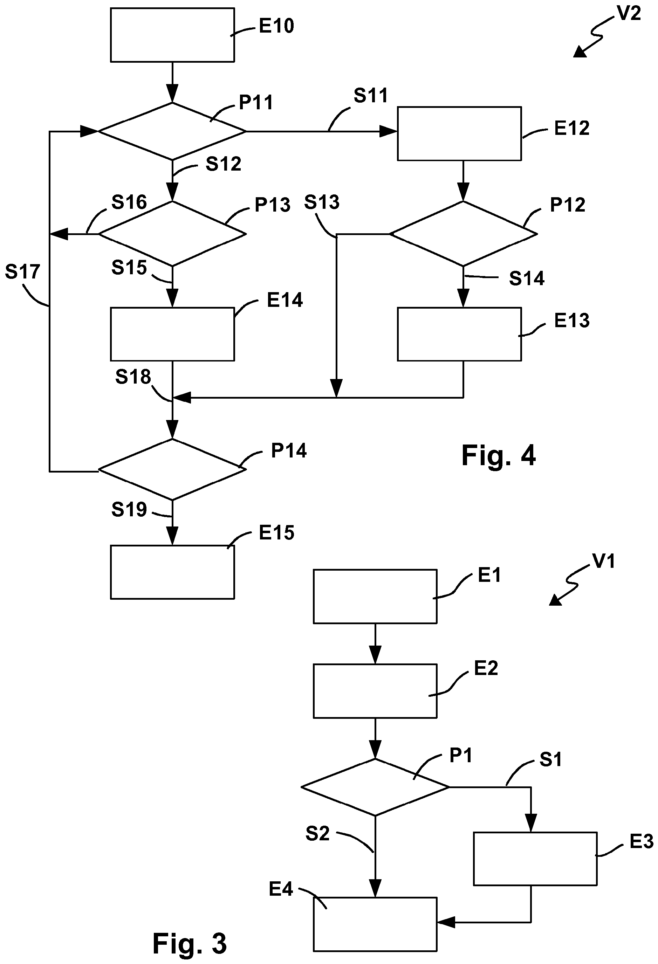

Das Kupplungssteuermodul 30 weist einen Prozessor 33 auf, der mit einem Speicher 34 kommuniziert. In dem Speicher 34 sind beispielsweise ein Steuerungsprogramm 38 zur Steuerung der Funktionen der Anhängekupplung 10 sowie ein Kommunikationsprogramm 39 gespeichert, deren Programmcode von dem Prozessor 33 ausgeführt werden kann, beispielsweise zur Ausführung der in Flussdiagrammen dargestellten Funktionen gemäß Figuren 3 und 4.

Das Kupplungssteuermodul 30 kann über eine Busschnittstelle 36 digital Daten auf dem Bus 85 senden oder empfangen. Dazu wird noch näheres erläutert.

Das Kupplungssteuermodul 30 kommuniziert über den Bus 85 mit den Kraftfahrzeugbusmodulen 90A - 90F beispielsweise derart, dass es den aktuellen Betriebsstatus der Anhängekupplung 10 auf dem Bus 85 meldet. Wenn also beispielsweise die Anhängersteckdose 19 belegt ist, der Steckverbinder 185 eingesteckt ist, meldet dies das Kupplungssteuermodul 30 auf dem Bus 85 an die Kraftfahrzeugbusmodule 90A - 90F. Beispielsweise fließt in diesem Fall Strom über die Anhängersteckdose 19, den Steckverbinder 185 und die Beleuchtungseinrichtung 186 oder ist der Widerstand dieser Konfiguration geringer als dann, wenn kein Steckverbinder 185 in die Anhängersteckdose 19 eingesteckt ist. Somit kann der Belegungsstatus der Anhängersteckdose 19 von dem Kupplungssteuermodul 30, beispielsweise durch eine entsprechende Konfiguration der Schnittstelle 32 oder Ausgestaltung der Schnittstelle 32, ermittelt und auf dem Bus 85 gemeldet werden. In diesem Fall wird beispielsweise das für die Fahrstabilisierung des Kraftfahrzeugs 80 zuständige Kraftfahrzeugbusmodul 90B eine andere Betriebsweise auswählen als dann, wenn kein Anhänger 180 an das Kraftfahrzeug 80 angekoppelt ist. Die physikalischen Zustände beim Anhängerbetrieb sind andere als bei einem Betrieb ohne Anhänger. Das ist an sich bekannt. Ebenfalls reagiert beispielsweise das Motorsteuergerät oder Kraftfahrzeugbusmodul 90C bei Anhängerbetrieb anders, indem es beispielsweise andere Lastprogramme oder Ansteuerungsprogramme zur Ansteuerung des Motors 82 betreibt. Dadurch kann beispielsweise eine Überlastung des Motors 82 bei Anhängerbetrieb vermieden werden.

Das Steuerungsprogramm 38 steuert beispielsweise die Funktionen der Anhängersteckdose 19 an derart, dass die Beleuchtungseinrichtung 186 des Anhängers 180 synchron mit der Beleuchtungseinrichtung 87 des Kraftfahrzeugs 80 arbeitet, d.h. dass beispielsweise auf derselben Seite Blinkleuchten 87A des Kraftfahrzeugs 80 und Blinkleuchten 186A des Anhängers 180 aktiviert werden, die Bremsleuchten aktiviert werden und dergleichen.

Das Steuerungsprogramm 38 kann auch beispielsweise dafür vorgesehen sein, einen oder beide der Antriebe 17, 18 anzusteuern. So kann beispielsweise dann, wenn das Kraftfahrzeug 80 fährt, beispielweise eine Mindestgeschwindigkeit überschritten ist, die Funktion des Antriebs 17 und die Funktion des Antriebs 18 deaktiviert sein. Somit kann beispielsweise der Kupplungsarm 14 beim Fahrbetrieb des Kraftfahrzeugs 80 nicht zwischen der Gebrauchsstellung G und der Nichtgebrauchsstellung N verstellt werden. Somit reagiert also auch das Kupplungssteuermodul 30 mit seinem Steuerungsprogram 38 auf den jeweiligen Betriebszustand des Kraftfahrzeugs 80.

Man erkennt, dass eine Kommunikation zwischen dem Kupplungssteuermodul 30 und den Kraftfahrzeugbusmodulen 90A - 90F für einen optimalen Betrieb des Kraftfahrzeugs 80 alleine oder mit Anhänger 180 wesentlich ist.

Nun sind typischerweise die Kraftfahrzeugbusmodule 90A - 90F des Kraftfahrzeugs 80 dann, wenn dieses bei seiner Herstellung oder Auslieferung noch keine Anhängekupplung 10 besitzt, nicht auf einen Betrieb mit einer Anhängekupplung eingerichtet. So kann beispielsweise das Fahrstabilitätsprogramm des Kraftfahrzeugbusmoduls 90B normalerweise nur den Betrieb des Kraftfahrzeugs 80 ohne Anhänger 180 realisieren. Zwar ist in der Regel ein weiteres Programm oder eine Konfiguration für den Anhängerbetrieb bereits im Auslieferungszustand oder Herstellungszustand des Kraftfahrzeugbusmoduls 90B vorhanden, so dass dieses prinzipiell einen Anhängerbetrieb leisten kann. Das betreffende Programm ist aber nicht abrufbar.

Auch ein beispielsweise für die Heckfunktionen des Kraftfahrzeugs 80 zuständiges Kraftfahrzeugbusmodul 90A "kennt" anfänglich zunächst nur den Betrieb des Kraftfahrzeugs 80 alleine, also ohne Anhänger 180. So ist beispielsweise die Parkraumüberwachung oder Abstandsmesseinrichtung 88 stets dann aktiv, wenn das Kraftfahrzeug 80 beispielsweise in einem niedrigen Geschwindigkeitsbetrieb betrieben wird und/oder ein Rückwärtsgang eingelegt ist bzw. das Kraftfahrzeug 80 für die Rückwärtsfahrt bereitsteht. Auch die Beleuchtungseinrichtung 87 wird vom Kraftfahrzeugbusmodul 90A typischerweise so angesteuert, als ob kein Anhänger 180 angehängt ist. So wird beispielsweise eine Nebelschlussleuchte bei entsprechender Aktivierung im Cockpit des Kraftfahrzeugs 80 stets eingeschaltet oder ausgeschaltet unabhängig davon, ob ein Anhänger 180 angehängt ist oder nicht. Das Kraftfahrzeugbusmodul 90A arbeitet also stets im Auslieferungszustand im reinen "Kraftfahrzeugbetrieb ohne Anhänger".

Die Beleuchtungseinrichtung 87 und die Abstandsmesseinrichtung 88 sind über Schnittstellen 91, 92 an das Kraftfahrzeugbusmodul 90A angeschlossen.

Die Funktionen der Kraftfahrzeugbusmodule 90A - 90F sind jedoch nur dann auf den Betrieb mit der Anhängekupplung 10 abgestimmt, wenn sie jeweils mit einer Konfigurationskennung 41 versehen sind. Die Konfigurationskennung 41 kann man auch als Parametrierung "Anhängerbetrieb" bezeichnen. Beispielsweise ist ein Bit im Speicher 94 eines jeweiligen Kraftfahrzeugbusmoduls 90 im Auslieferungszustand des Kraftfahrzeugs 80 auf logisch "0" gesetzt. Wenn jedoch die Konfigurationskennung 41 eingetragen ist, ist das Bit auf logisch "1" gesetzt.

Ein Prozessor 93 eines jeweiligen Kraftfahrzeugbusmoduls 90A - 90F führt eines oder mehrere Steuerungsprogramme aus, um die jeweilige Funktionalität des Kraftfahrzeugbusmoduls 90A - 90F zu realisieren, beispielsweise eine Fahrstabilisierung, eine Motorsteuerung des Motors 82 oder dergleichen. Der Prozessor 93 oder das von ihm ausgeführte Steuerungsprogramm liest beispielsweise den Inhalt des Speichers 94 im Hinblick auf die Konfigurationskennung 41 aus.

In Figur 2 ist noch eine alternative Konfiguration exemplarisch dargestellt. Im oberen Teil der Darstellung ist die Kommunikation des Kupplungssteuermoduls 30 direkt mit dem Kraftfahrzeugbusmodul 90A, dem Hecksteuergerät, dargestellt. Im unteren Teil ist eine Kommunikation über ein Gateway, welches in der Übersichtsdarstellung gemäß Figur 1 nicht dargestellt ist, erläutert. Das Gateway wird durch das Kraftfahrzeugbusmodul 90D dargestellt, welches seinerseits mit den Kraftfahrzeugbusmodulen 90E und 90F über Verbindungen 185 und 285 kommuniziert. So ist beispielsweise denkbar, dass das Gateway 90D anhand der Konfigurationskennung 42, die es vom Kupplungssteuermodul 30 erhalten hat, auf den Anhängerbetrieb umgeschaltet ist und mit den an es angeschlossenen Kraftfahrzeugbusmodulen 90E und 90F im Sinne eines Anhängerbetriebs kommunizieren kann, wenn die Anhängekupplung 10 genutzt ist. So können beispielsweise Busnachrichten vom Kupplungssteuermodul 30 vom Gateway 90D an die Kraftfahrzeugbusmodule 90E und 90F weitergeleitet werden, wobei diese Nachrichten ggf. auch umgesetzt werden in andere Nachrichten oder um Informationen erweitert werden, die den Kraftfahrzeugbusmodulen 90E und 90F den Anhängerbetrieb signalisieren. In umgekehrter Richtung kann die Kommunikation von den Kraftfahrzeugbusmodulen 90E und 90F über das Gateway bzw. das Kraftfahrzeugbusmodul 90D auch zum Kupplungssteuermodul 30 hin realisiert werden. Die Kraftfahrzeugbusmodule 90E und 90F können beispielsweise Kraftfahrzeugsteuermodule bilden, die Funktionen des Kraftfahrzeugs, beispielsweise der Beleuchtungseinrichtung 87, steuern und/oder überwachen. Wenn also beispielsweise Nachrichten der Kraftfahrzeugbusmodule 90E oder 90F für das Kupplungssteuermodul 30 relevant sind, werden sie vom Gateway bzw. Kraftfahrzeugbusmodul 90D an das Kupplungssteuermodul 30 weitergeleitet. Die Verbindungen 185, 285 können selbstverständlich auch Busverbindungen sein oder sind Teile des Busses 85.

Weiterhin ist es möglich, dass das Kraftfahrzeugbusmodul 90D in seiner Funktion als Gateway sozusagen als Zwischenglied der nachfolgend erläuterten Parametrierung bzw. Konfigurierung der Kraftfahrzeugbusmodule 90E oder 90F dient. So kann beispielsweise eine Konfiguration des Kraftfahrzeugbusmoduls 90E über das Gateway bzw. Kraftfahrzeugbusmodul 90D hinweg funktionieren derart, dass am Ende dieses Konfigurationsprozesses, der noch erläutert wird, die Konfigurationskennung 41 im Speicher 94 des Kraftfahrzeugbusmoduls 90E steht und dieses dann den Anhängerbetrieb realisieren kann.

Beispielsweise kann das Kraftfahrzeugbusmodul 90E anstelle des bereits erläuterten Kraftfahrzeugbusmoduls 90A als Hecksteuergerät dienen und über seine Schnittstellen 91, 92 die Beleuchtungseinrichtung 87 und/oder die Abstandsmesseinrichtung 88 ansteuern bzw. bedienen.

Das Kommunikationsprogramm 39, das man auch als Konfigurationsprogramm bezeichnen oder betrachten kann, führt beispielsweise das in Figur 3 schematisch angedeutete Konfigurationsprogramm durch bzw. eine Überprüfung durch, ob eine Konfiguration eins oder mehrere der Kraftfahrzeugbusmodule 90A - 90F notwendig ist oder nicht.

In einem Schritt E1 erhält beispielsweise das Kommunikationsprogramm 39 einen Trigger oder ein Triggersignal. Ein Trigger kann beispielsweise sein, dass ein Bedienschalter 45 des Kupplungssteuermoduls 30 betätigt wird, beispielsweise ein Druckschalter oder dergleichen. Ein Triggersignal oder Triggerereignis kann aber auch in Kombination damit oder separat davon sein, z.B. dass sich ein Zustand einer Zündung des Motors 82 ändert oder eine Bremse 82A des Kraftfahrzeugs 80 in einer bestimmten Bedienfolge oder erstmals betätigt wird. Wenn also beispielsweise der Motor 82 gestartet wird oder ausgeschaltet wird, ein Lenkradschalter oder Schlüsselschalter 82B des Kraftfahrzeugs 80 aus einer Ausschaltstellung in eine Einschaltstellung oder Fahrbereitschaftsstellung geschaltet wird, im allgemeinen also ein "Zündungswechsel" stattfindet, wird dies vom Kommunikationsprogramm 39 im Schritt E1 als ein Triggersignal erkannt. Z.B. sendet ein Kraftfahrzeugbusmodul, zum Beispiel das Kraftfahrzeugbusmodul 90C, an welches der Schlüsselschalter 82B angekoppelt ist, eine Meldung über die Betätigung des Schlüsselschalters auf dem Bus 85, die für das Kommunikationsprogramm 39 bzw. das Kupplungssteuermodul 30 eine Trigger-Busnachricht TB darstellt.

Weitere Triggersignale sind beispielsweise, dass ein Fahrer des Kraftfahrzeugs 80 ein bestimmtes Licht der Beleuchtungseinrichtung 87 anschaltet oder ausschaltet oder eine bestimmte Bedienfolge vornimmt. Auch dann, wenn das Kupplungssteuermodul 30 beispielsweise aufgrund einer Last, die auf dem Kupplungsarm 14 aufliegt, aufgrund der Belegung der Anhängersteckdose 19 durch den Steckverbinder 185 oder dergleichen, das Vorhandensein eines Anhängers erkennt, kann dies als Triggersignal oder Triggerereignis dienen. Es ist möglich, dass das Triggerereignis ein dediziert beispielsweise beim Einbau der Anhängekupplung 10 bzw. des Kupplungssteuermoduls 30 vorgenommenes Triggerereignis ist. Allerdings ist es auch möglich, dass eine Konfiguration des Kraftfahrzeugs 80 auf den Anhängerbetrieb bzw. das Vorhandensein der Anhängekupplung immer wieder wiederholt werden muss, beispielsweise dann, wenn das Kraftfahrzeug 80 in der Werkstatt war.

Beispielsweise ist es möglich, dass bei einem typischen Werkstattaufenthalt ein Diagnosegerät 100 angeschlossen wird und ein Diagnoseprogramm 101 ausgeführt wird. Mit dem Diagnoseprogramm 101, dessen Programmcode durch einen Prozessor 103 des Diagnosegeräts 100 ausführbar ist und das beispielsweise in einem Speicher 104 gespeichert ist, kann man beispielsweise in einer Werkstatt die Funktionen der Kraftfahrzeugbusmodule 90A - 90F in an sich bekannter Weise überprüfen und ggf. neu einrichten. So wird beispielsweise ein neues Fahrstabilitätsprogramm in das Kraftfahrzeugbusmodul 90B geladen, wenn sich Neuerungen ergeben. In der Regel sind in dem Diagnosegerät 100 oder in einer zentralen Datenbank, an die das Diagnosegerät 100 angeschlossen werden kann, zudem auch Konfigurationsdaten des Kraftfahrzeugs 80 gespeichert. Die zentrale Datenbank ist beispielsweise eine Datenbank, die vom Hersteller des Kraftfahrzeugs 80 betrieben wird. Wenn jedoch dem Hersteller des Kraftfahrzeugs 80 sozusagen nicht bekannt ist, dass das Kraftfahrzeug 80 mit einer Anhängekupplung 10 ausgerüstet oder nachgerüstet worden ist, kann es sein, dass bei einer jeweiligen Diagnose anhand des Diagnosegeräts 100 die Konfigurationskennungen 41, 42 überschrieben oder gelöscht werden. In einer derartigen Situation schafft die Erfindung beispielsweise Abhilfe. Aber auch dann, wenn das Kraftfahrzeug 80 nachträglich mit der Anhängekupplung 10 ausgestattet wird und insbesondere das Kupplungssteuermodul 30 an den Bus 85 angeschlossen wird, kann das Kupplungssteuermodul 30 die entsprechende Konfiguration der übrigen Kraftfahrzeugbusmodule 90A - 90F vornehmen.

Das Diagnosegerät 100 ist beispielsweise über eine Onboard-Diagnoseschnittstelle 89 anschließbar.

Die Onboard-Diagnoseschnittstelle 89 kann auch vom Kupplungssteuermodul 30 genutzt werden, beispielsweise zur Konfiguration eines oder mehrerer der Kraftfahrzeugbusmodule 90A - 90F. Zur Verwendung mit der Onboard-Diagnoseschnittstelle 89 hat das Kupplungssteuermodul 30 beispielsweise eine Schnittstelle 37. Es ist aber auch möglich, dass das Kupplungssteuermodul 30 wie bereits erläutert über eine Busschnittstelle 36 zur direkten Verbindung mit dem Bus 85 ausgestaltet oder ausgerüstet ist.

In einem Schritt E2 wird im Verfahren V1 beispielsweise überprüft, ob das Kraftfahrzeug 80 als Ganzes, insbesondere aber eines oder mehrere der Kraftfahrzeugbusmodule 90A - 90F, für den Anhängerbetrieb bzw. den Betrieb mit dem Kupplungssteuermodul 30 kodiert ist. Wenn in einem Prüfschritt P1 festgestellt wird, dass bereits eine Konfiguration für den Anhängerbetrieb bzw. den Betrieb mit dem Kupplungssteuermodul 30 vorgesehen ist, verzweigt das Verfahren V1 zu einem Schritt E4, also einem Ende. Wenn jedoch die Kodierung nicht vorhanden ist oder unvollständig ist, verläuft das Verfahren V1 in einem Verzweigungsschritt S1 in einen Schritt E3, der die Kodierung eines oder mehrerer der Kraftfahrzeugbusmodule 90A - 90F vorsieht.

Detaillierter ist der Schritt E3 als Verfahren V2 dargestellt, nämlich als Kodiervorgang.

Beispielsweise beginnt das Verfahren V2 in einem Start-Schritt E10, von welchem ausgehend zunächst überprüft wird, ob ein jeweiliges Kraftfahrzeugbusmodul 90A-90F in einen Diagnosemodus gesetzt werden muss. In den Diagnosemodus ist das jeweilige Kraftfahrzeugbusmodul 90A - 90F bereit, beispielsweise Informationen über die Parametrierung mit der Konfigurationskennung 41 oder 42 zu senden oder die Konfigurationskennung 41, 42 zu empfangen und ggf. in seinem Speicher 94 abzulegen.

Wenn in dem Prüfschritt P11 festgestellt wird, dass ein zu konfigurierendes oder zu kodierendes Kraftfahrzeugbusmodul 90A - 90F nicht in den Diagnosemodus versetzt werden kann, verzweigt das Verfahren V2 in einen Überprüfungsschritt P13, in welchem überprüft wird, wie oft der Schritt P11 durchgeführt wird. Wenn eine bestimmte Anzahl von Wiederholungen noch nicht erreicht ist, verzweigt der Prüfschritt P13 in einen Zweig S16 und zurück zum Prüfschritt P11.

Wenn jedoch im Prüfschritt P13 festgestellt wird, dass eine bestimmte Anzahl von Versuchen, ein jeweiliges Kraftfahrzeugbusmodul 90A in einen Diagnosemodus zu versetzen, erfolglos war, schließt das Verfahren V2 in einem Schritt E14 daraus, dass das jeweilige Steuergerät oder Kraftfahrzeugbusmodul 90A - 90F nicht vorhanden ist. Eine solche Situation kann beispielsweise dann gegeben sein, wenn beim Kraftfahrzeug 80 für die Funktion der Abstandsmesseinrichtung 88 und die Funktion der Beleuchtungseinrichtung 87 unterschiedliche Kraftfahrzeugbusmodule 90 vorgesehen sind. Für eine Beleuchtungsfunktion ist jedenfalls immer ein Kraftfahrzeugbusmodul vorgesehen, während die Abstandsmesseinrichtung nicht in jedem Kraftfahrzeug 80 eingebaut sein muss. Hier handelt es sich häufig um eine optionale Variante bzw. eine Wunschkonfiguration. Wenn also beispielsweise keine Abstandssensor oder Abstandsmesseinrichtung 88 vorhanden ist, ist auch das zugehörige Kraftfahrzeugbusmodul 90 nicht notwendig, was das Kupplungssteuermodul 30 im Prüfschritt P11 bzw. P13 letztlich erkennt, und in den Schritt E14 verzweigt. Der Schritt E14 geht in einem Zweig S18 zu einem weiteren Prüfschritt P14, in welchem überprüft wird, ob sämtliche theoretisch mit der Konfigurationskennung 41 oder 42 zu versehenden Kraftfahrzeugbusmodule 90A - 90F abgefragt bzw. konfiguriert wurden. Ist dies nicht der Fall, verzweigt das Verfahren V2 in einen Zweig S17 wieder zurück zum Prüfschritt P11, ansonsten in einem Zweig S19 zum Schluss-Schritt E15.

Die eigentliche Diagnose bzw. Konfiguration ist sozusagen im rechten Teil des Verfahrens V2 dargestellt.

Wenn ein jeweiliges Kraftfahrzeugbusmodul 90A - 90F in einen Diagnosemodus versetzbar ist, verzweigt das Verfahren V2 im Prüfschritt P11 in einen Zweig S11, der zu einem Schritt E12 führt. Dieser bedeutet, dass die Konfigurationsdaten eines jeweiligen Kraftfahrzeugbusmoduls 90A - 90F abgefragt oder ausgelesen werden. Nach Erhalt der jeweiligen Antwort vom Kraftfahrzeugbusmodul 90A - 90F kann das Kupplungssteuermodul 30 im Prüfschritt P12 überprüfen, ob das Kraftfahrzeugbusmodul 90A - 90F kodiert ist, also die Konfigurationskennung 41 oder 42 aufweist oder nicht. Wenn dies bereits der Fall ist, d.h. die Kodierung auf den Anhängerbetrieb bzw. die Anhängekupplung 10 vorhanden ist, verzweigt das Verfahren V2 in einem Schritt S13 zum Prüfschritt P14, also dem Schritt, bei dem überprüft wird, ob alle notwendigen Kodierungen oder Konfigurationen bei den Kraftfahrzeugbusmodulen 90A - 90F des Kraftfahrzeugs 80 vorgenommen sind.

Ansonsten verläuft das Verfahren V2 von Prüfschritt P12 über den Pfad S14 zum eigentlichen Konfigurationsschritt bzw. Kodierschritt, nämlich dem Schritt E13, in welchem die Konfiguration für den Anhängerbetrieb bzw. die Anhängekupplung 10 bei einem jeweiligen Kraftfahrzeugbusmodul 90A - 90F vorgenommen wird. Beispielsweise sendet das Kupplungssteuermodul 30 die Konfigurationskennung 41, 42 an das Kraftfahrzeugbusmodul 90A, das Gateway-Kraftfahrzeugbusmodul 90D oder dergleichen, welches dann die Konfigurationskennung 41, 42 in seinen jeweiligen Speicher 94 übernimmt.

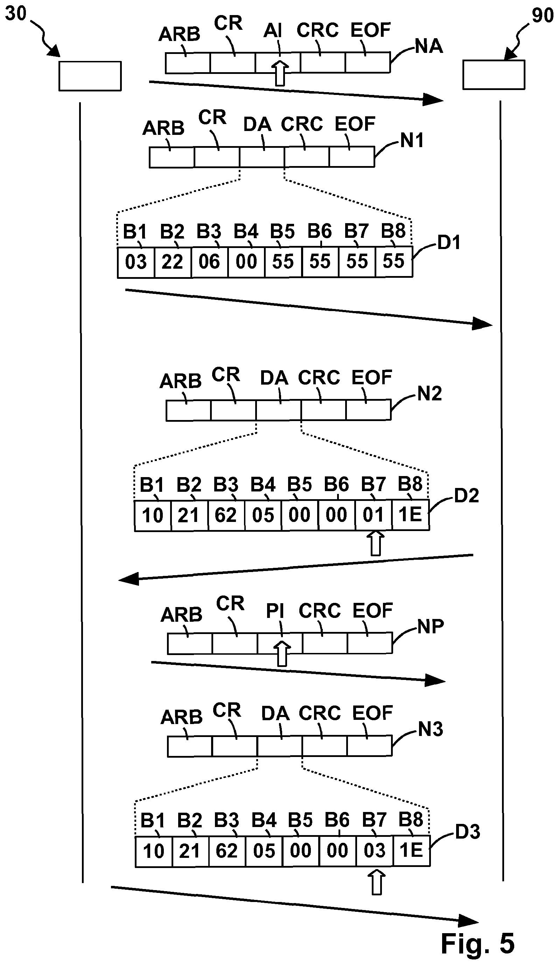

Eine beispielhafte Kommunikation zwischen dem Kupplungssteuermodul 30 in einem der Kraftfahrzeugbusmodule 90A - 90F, ist in Figur 5 dargestellt. Eines der jeweiligen Kraftfahrzeugbusmodule 90A - 90F ist als Kraftfahrzeugbusmodul 90 bezeichnet.

Die Module 30, 90 kommunizieren dabei über den Bus 85 oder die Schnittstelle 37 miteinander. Die Module 30, 90 senden beispielsweise CAN-Nachrichten, beispielsweise eine Nachricht N1, N2 oder dergleichen, also CAN-Busnachrichten, die den typischen Aufbau mit Arbitrationsfeld ARB, Controllfeld CR, Datenfeld DA, CRC-Feld CRC sowie einem Feld End of Frame haben. Die Nachrichten werden auch als sogenannte Frames bezeichnet. Interessant ist nachfolgend im Wesentlichen der Inhalt der Daten DA, beispielsweise der Daten D1.

Das Datenfeld mit den Daten D1 enthält beispielsweise Daten B1 - B8. Das Kupplungssteuermodul 30 sendet also beispielsweise zunächst eine Abfrage-Busnachricht NA, mit der es die jeweilige Konfiguration des Kraftfahrzeugbusmoduls 90A - 90F abfragt. Die Abfrage-Busnachricht NA kann dabei an mehrere Kraftfahrzeugbusmodule 90 gerichtet sein, also eine Broadcastnachricht sein, oder dediziert und gezielt an eines der Kraftfahrzeugbusmodule 90A, 90B, 90C, 90D, 90E, 90F gerichtet sein, so dass nur dessen spezielle Konfigurationsdaten abgefragt werden.

Beispielsweise könnte vorgesehen sein, dass die Kennungen B5 - B8 jeweils auf den Wert 55 stehen, was die Abfrage bei mehreren der Kraftfahrzeugbusmodule 90 darstellen kann. Es ist auch möglich, dass in einem Adressfeld einer Busnachricht eine Broadcast-Kennung bzw. eine Adressierung an eine Vielzahl von Kraftfahrzeugbusmodulen angegeben ist.

Ein jeweiliges Kraftfahrzeugbusmodul 90 antwortet auf die Abfrage-Busnachricht N1 mit der Konfigurationsinformation-Busnachricht N2, welche die entsprechende Konfiguration oder Parametrierung des jeweiligen Kraftfahrzeugbusmoduls 90 enthält. Beispielsweise ist das Datenfeld B7 mit der Kennung oder Information 01 versehen, die signalisiert, dass das jeweilige Kraftfahrzeugbusmodul 90 nicht mit der Konfigurationskennung 41 versehen ist.

Daraufhin sendet das Kupplungssteuermodul 30 die Konfiguration-Busnachricht N3 an das Kraftfahrzeugbusmodul 90, welche im Datenfeld B7 die Konfigurationskennung 41 enthält, d.h. der Wert des Datenfelds B7 ist von 01 (Busnachricht N2) auf den Wert 03 verändert.

Denkbar ist allerdings wie erläutert aber auch ein Szenario, dass das Kupplungssteuermodul 30 die Nachricht N3 mit den Daten D3 zyklisch an jedes oder alle Kraftfahrzeugbusmodule 90 sendet, d.h. dass diese quasi zwangsweise immer wieder dazu aufgefordert werden, die Konfigurationskennung 41 in ihrer jeweilige Konfigurationsdaten 95 zu übernehmen.

Das Kupplungssteuermodul 30 kann sozusagen ab Werk, d.h. im Auslieferungszustand, zur Konfiguration der Kraftfahrzeugbusmodule 90 ausgestaltet sein. Beispielsweise könnten in den Konfigurationsdaten 40 des Kupplungssteuermoduls 30 die Konfigurationskennungen 41, 42 enthalten sein. Weiterhin können in den Konfigurationsdaten 40 auch die Adressen und/oder Anzahlen der zu konfigurierenden Kraftfahrzeugbusmodule 90 vorgesehen sein. Weiterhin ist es möglich, dass spezielle Betriebsmodi, Konfigurationsmodi oder dergleichen, die für einen jeweiligen Typ eines Kraftfahrzeugs 80, insbesondere dessen Kraftfahrzeugbusmodule 90 erforderlich sind, in den Konfigurationsdaten 40 eingespeichert sind.

Es ist aber auch möglich, dass das Kupplungssteuermodul 30 über eine Parametrierschnittstelle 35 parametrierbar ist, über die beispielsweise die Konfigurationsdaten 40 konfigurierbar bzw. parametrierbar sind. Die Parametrierschnittstelle 35 ist beispielsweise eine USB-Schnittstelle, eine WLAN-Schnittstelle oder dergleichen. Z.B. kann das Kupplungssteuermodul 30 über die Parametrierschnittstelle 35 eine Nachricht PA erhalten, in der z.B. die Konfigurationskennungen 41 und/oder 42 enthalten sind. Z.B. kann das Diagnosegerät 100 oder ein ähnliches Gerät mit der Parametrierschnittstelle 35 verbunden werden, um die Parametrierung zu leisten.

Ohne weiteres sind auch Sicherheitsfunktionen durch das Kupplungssteuermodul 30 realisierbar. So kann beispielsweise vor dem Senden der Abfrage-Busnachricht N1 eine Authentifizierung und/oder Identifizierung bei einem jeweiligen Kraftfahrzeugbusmodul 90 vorgesehen sein. Beispielsweise sendet das Kupplungssteuermodul 30 daher zunächst, d.h. vor der Abfrage-Busnachricht N1, eine Akzeptanz-Nachricht NA mit einer Akzeptanz-Information AI, beispielsweise enthaltend Authentifizierungsdaten und/oder Identifizierungsdaten für das Kupplungssteuermodul 30. Somit wird sichergestellt, dass kein unbefugtes bzw. ungeeignetes Kupplungssteuermodul sozusagen Zugang zu den Konfigurationsdaten des jeweiligen Kraftfahrzeugbusmoduls 90 erhält.

Es kann auch notwendig sein, dass das Kupplungssteuermodul 30 ein jeweiliges Kraftfahrzeugmodul 90 in einen Parametriermodus bzw. Bereitschaftsmodus schalten muss, so dass dieses für den Empfang der Konfiguration-Busnachricht N3 empfänglich oder freigeschaltet ist. So kann beispielsweise vorgesehen sein, dass das Kupplungssteuermodul 30 vor dem Senden der Konfiguration-Busnachricht N3 zunächst die Schalt-Busnachricht NP versendet, welche die Schaltinformation PI enthält. Die Schaltinformation PI schaltet das empfangende Kraftfahrzeugbusmodul 90 für den Empfang der Konfiguration-Busnachricht N3 frei.

Wenn die Konfigurationskennungen 41 und/oder 42 bei den Kraftfahrzeugbusmodulen 90 vorhanden sind, werten diese beispielsweise eine Melde-Busnachricht M aus, welche eine Nutzungsinformation N19 enthält. Die Nutzungsinformation N19 signalisiert, ob die Anhängersteckdose 19 durch den Anhänger 180 bzw. den Steckverbinder 185 genutzt ist oder nicht.

Zum Anschluss des Kupplungssteuermoduls 30 an die Onboard-Diagnoseschnittstelle 89 kann ein Steckverbinder 43 vorgesehen sein.

Nach der Konfiguration der Kraftfahrzeugbusmodule 90 mit der Konfigurationskennung 41 und/oder 42 kann ein jeweiliges Kraftfahrzeugbusmodul 90 auch empfänglich für beispielsweise eine Steuer-Busnachricht SN sein. Mit der Steuer-Busnachricht SN oder anderen derartigen Steuer-Busnachrichten kann das Kupplungssteuermodul 30 beispielsweise Steuerinformationen an eines oder mehrere der Kraftfahrzeugbusmodule 90 senden. So kann beispielsweise anhand der Steuer-Busnachricht SN ein Steuerprogramm des für den Motor 82 zuständigen Kraftfahrzeugbusmoduls 90C aktiviert werden, welches für den Anhängerbetrieb vorgesehen ist.

Es ist möglich, dass das Kupplungssteuermodul 30 beispielsweise über Ausgabemittel 44, insbesondere optische Ausgabemittel (eine LED oder dergleichen) und/oder akustische Ausgabemittel, beispielsweise Lautsprecher oder Summer, einen Bediener darauf hinweist, dass eine erste Konfiguration, d. h. ein Versenden der Konfigurationskennung in 41, 42, an die Kraftfahrzeugbusmodule 90 noch nicht stattgefunden hat. Dies kann dem Bediener beispielsweise dazu veranlassen, den Bedienschalter 45 zu betätigen. Diese Warnung kann beispielsweise bei einer ersten Inbetriebnahme des Kupplungssteuermoduls 30 erfolgen. Es ist auch möglich, dass das Kupplungssteuermodul 30 ein Anschließen des Diagnosegeräts 100 erkennt.

Im Zusammenhang mit dem Anschluss des Diagnosegeräts 100 können wie erwähnt die Konfigurationskennung in 41 und/oder 42 bei den Kraftfahrzeugbusmodulen 90 sozusagen verloren gehen oder überschrieben werden. Auch in diesem Fall kann das Kupplungssteuermodul 30 sozusagen von selbst wieder mit der Konfiguration der Kraftfahrzeugbusmodule 90 beginnen und/oder die Warnung über das Ausgabemittel 44 erzeugen.

## Patentansprüche

1. Kupplungssteuermodul (30) für eine Anhängekupplung (10) zum Anschluss an ein Bordnetz (86) eines Kraftfahrzeugs (80), wobei anhand der Anhängekupplung (10) ein Anhänger (180) an das Kraftfahrzeug (80) angehängt werden kann, wobei das Kupplungssteuermodul (30) mindestens eine elektrische Funktion der Anhängekupplung (10) ansteuert und/oder überwacht, wobei der Kupplungssteuermodul (30) eine Busschnittstelle (36) zur Verbindung mit einem digitalen Bus (85), insbesondere einem CAN-Bus, des Bordnetzes (86) des Kraftfahrzeugs (80) aufweist, wobei das Kupplungssteuermodul (30) über die Busschnittstelle (36) Busnachrichten (SN, M) an mindestens ein an den digitalen Bus (85) angeschlossenes Kraftfahrzeugbusmodul (90) des Kraftfahrzeugs (80) senden und Busnachrichten (SN, M) des mindestens einen Kraftfahrzeugbusmoduls (90) empfangen kann, **dadurch gekennzeichnet, dass** das Kupplungssteuermodul (30) zum Senden mindestens einer Konfiguration-Busnachricht (N3) an das mindestens eine Kraftfahrzeugbusmodul (90) über die Busschnittstelle (36) ausgestaltet ist, wobei die Konfiguration-Busnachricht (N3) eine Konfigurationskennung (41, 42) zum Eintragen in Konfigurationsdaten (95) des Kraftfahrzeugbusmoduls (90) enthält, wobei die Konfigurationskennung (41, 42) dafür vorgesehen ist, dass das mindestens eine Kraftfahrzeugbusmodul (90) beim Weiterbetrieb des Kraftfahrzeugs (80) anhand der erhaltenen Konfigurationskennung (41, 42) mindestens eine Funktion in Abhängigkeit von dem Vorhandensein der Anhängekupplung (10) und/oder von dem Kupplungssteuermodul (30) erhaltenen Busnachrichten (SN, M) ausführen kann.

2. Kupplungssteuermodul (30) nach Anspruch 1, **dadurch gekennzeichnet, dass** die Konfigurationskennung (41, 42) dafür vorgesehen ist, dass das mindestens eine Kraftfahrzeugbusmodul (90) Steuer-Busnachrichten (SN) und/oder Melde-Busnachrichten (M) des Kupplungssteuermoduls (30) auswertet und/oder dass das mindestens eine Kraftfahrzeugbusmodul (90) zu einer Kommunikation mit dem Kupplungssteuermodul (30) freigeschaltet und/oder bereit ist und/oder dass das mindestens eine Kraftfahrzeugbusmodul (90) in einer Funktion als ein Gateway an mindestens ein mit dem Kraftfahrzeugbusmodul (90) insbesondere über den Bus (85) verbundenes weiteres Kraftfahrzeugbusmodul (90E, 90F) oder Kraftfahrzeugsteuermodul weiterleitet.

3. Kupplungssteuermodul (30) nach Anspruch 1 oder 2, **dadurch gekennzeichnet, dass** die Steuer-Busnachrichten (SN) und/oder Melde-Busnachrichten (M) mindestens eine Nutzungsinformation (N19) enthalten, die eine Nutzung der Anhängekupplung (10) durch einen an das Kraftfahrzeug (80) angekuppelten Anhänger (180), insbesondere eine Nutzung einer Anhängersteckdose (19) der Anhängekupplung (10), signalisiert.

4. Kupplungssteuermodul (30) nach einem der vorhergehenden Ansprüche, **dadurch gekennzeichnet, dass** es zum Empfangen einer Konfigurationsinformation-Busnachricht (N2) von dem mindestens einen Kraftfahrzeugbusmodul (90) ausgestaltet ist, wobei die Konfigurationsinformation-Busnachricht (N2) eine Information darüber enthält, ob in den Konfigurationsdaten (95) des mindestens einen Kraftfahrzeugbusmoduls (90) die Konfigurationskennung (41, 42) enthalten ist, und/oder dass das Kupplungssteuermodul (30) die Konfiguration-Busnachricht (N3) in Abhängigkeit davon an das mindestens eine Kraftfahrzeugbusmodul (90) sendet, ob in dessen Konfigurationsdaten (95) die Konfigurationskennung (41, 42) enthalten ist.

5. Kupplungssteuermodul (30) nach einem der vorhergehenden Ansprüche, **dadurch gekennzeichnet, dass** es zum Senden einer Abfrage-Busnachricht (N1) über den digitalen Bus (85) des Kraftfahrzeugs (80) ausgestaltet ist, mit der das Kupplungssteuermodul (30) bei dem mindestens einen Kraftfahrzeugbusmodul (90) und/oder mehreren an den Bus (85) angeschlossenen Kraftfahrzeugbusmodulen (90) die Konfigurationsinformation-Busnachricht (N2) abfragt.

6. Kupplungssteuermodul (30) nach einem der vorhergehenden Ansprüche, **dadurch gekennzeichnet, dass** es ausgestaltet ist, die Konfiguration-Busnachricht (N3) erst nach einem Abfragen und/oder Empfangen der Konfigurationsinformation-Busnachricht (N2) des mindestens Kraftfahrzeugbusmoduls (90) zu versenden, und/oder dass die Konfiguration-Busnachricht (N3) abgesehen von der Konfigurationskennung (41, 42) keine Information zur Ausgabe an einem Ausgabemittel des Kraftfahrzeugs (80) und/oder zum Ansteuern des mindestens einen Kraftfahrzeugbusmoduls (90) enthält.

7. Kupplungssteuermodul (30) nach einem der vorhergehenden Ansprüche, **dadurch gekennzeichnet, dass** es zum Senden der Konfiguration-Busnachricht (N3) in Abhängigkeit von mindestens einer zeitlichen Bedingung, insbesondere in vorbestimmten oder einstellbaren zeitlichen Zyklen, und/oder von mindestens einem Triggerereignis, insbesondere einer jeweiligen Inbetriebnahme des Kraftfahrzeugs (80), insbesondere einem Starten eines Antriebsmotors des Kraftfahrzeugs (80), und/oder einer erstmaligen Stromversorgung des Kupplungssteuermoduls (30) und/oder einer Betätigung einer Bremse (82A) des Kraftfahrzeugs (80) und/oder einem Schalten mindestens einer Leuchte (87A, 186A) des Kraftfahrzeugs (80) oder des Anhängers (180) und/oder einem elektrischen Triggersignal und/oder einer Trigger-Busnachricht (TB), und oder in Abhängigkeit von einer vorbestimmten Schaltfolge oder Bedienfolge eines elektrischen Funktionselements ausgestaltet ist, wobei vorteilhaft vorgesehen ist, dass das Kupplungssteuermodul (30) mindestens einen manuell betätigbaren elektrischen Bedienschalter (45) zur Erzeugung des Triggersignals oder Triggerereignisses aufweist.

8. Kupplungssteuermodul (30) nach einem der vorhergehenden Ansprüche, **dadurch gekennzeichnet, dass** es zur Verbindung mit einer Onboard-Diagnoseschnittstelle (89) des Kraftfahrzeugs (80) ausgestaltet ist und/oder eine Schnittstelle (37), insbesondere einen Steckverbinder (43), zur Verbindung mit einer Onboard-Diagnoseschnittstelle (89) aufweist.

9. Kupplungssteuermodul (30) nach einem der vorhergehenden Ansprüche, **dadurch gekennzeichnet, dass** es eine Parametrierschnittstelle (35) zur Parametrierung der Konfigurationskennung (41, 42) und/oder das mindestens eine Kraftfahrzeugbusmodul (90) kennzeichnender und/oder betreffender und im Zusammenhang mit dem Versenden der Konfigurationskennung (41, 42) stehender Daten aufweist und/oder dass es zum Senden einer Schaltinformation (PI) an das mindestens eine Kraftfahrzeugbusmodul (90) ausgestaltet ist, wobei das Kraftfahrzeugbusmodul (90) anhand der Schaltinformation (PI) in einen Parametriermodus schaltbar ist, in welchem das Kraftfahrzeugbusmodul (90) zur Parametrierung der Konfigurationskennung (41, 42) freigeschaltet ist.

10. Kupplungssteuermodul (30) nach einem der vorhergehenden Ansprüche, **dadurch gekennzeichnet, dass** es zum Senden mindestens einer Akzeptanzinformation (AI) zur Authentifizierung und/oder Identifizierung bei dem mindestens einen Kraftfahrzeugbusmodul (90) ausgestaltet ist, wobei das Kraftfahrzeugbusmodul (90) die Konfigurationskennung (41, 42) in Abhängigkeit von der Akzeptanzinformation (AI) in seine Konfigurationsdaten (95) übernimmt.

11. Kupplungssteuermodul (30) nach einem der vorhergehenden Ansprüche, **dadurch gekennzeichnet, dass** es Koppelmittel oder eine Schnittstelle (32) zur Ankopplung einer Anhängersteckdose (19), die zum Anstecken eines Steckverbinders (185) des Anhängers (180) vorgesehen ist, an das Bordnetz (86) des Kraftfahrzeugs (80) aufweist und/oder Steuermittel oder eine Schnittstelle (31) zum Ansteuern mindestens eines elektrischen Antriebs (17, 18), insbesondere eines Antriebs (17) einer Fixiereinrichtung (16) zum Fixieren der Anhängekupplung (10) in mindestens einer Betriebsstellung, insbesondere einer Gebrauchsstellung (G) und/oder einer Nichtgebrauchstellung (N), und/oder eines Antriebs (18) zum Verstellen eines Kupplungsarms (14) der Anhängekupplung (10) zwischen einer zum Anhängen des Anhängers (180) vorgesehenen Gebrauchsstellung (G) und einer für einen Nichtgebrauch des Kupplungsarms (14) vorgesehenen, insbesondere hinter einem Stoßfänger (84) des Kraftfahrzeugs (80) verborgenen, Nichtgebrauchsstellung (N), aufweist.

12. Kupplungssteuermodul (30) nach einem der vorhergehenden Ansprüche, **dadurch gekennzeichnet, dass** es Ausgabemittel (44) zu einer Ausgabe einer Meldung, insbesondere einer optischen und/oder akustischen Meldung, aufweist, bis es nach einer ersten Inbetriebnahme die Konfigurationskennung (41, 42) an das mindestens eine Kraftfahrzeugbusmodul (90) gesendet hat und/oder dass es zur Ermittlung, dass mindestens ein Kraftfahrzeugbusmodul (90) des Kraftfahrzeugs (80) die Konfigurationskennung (41, 42) nicht erhalten hat, anhand einer Überwachung einer Buskommunikation auf dem Bus (85) des Kraftfahrzeugs (80) ausgestaltet ist.

13. Kupplungssteuermodul (30) nach einem der vorhergehenden Ansprüche, **dadurch gekennzeichnet, dass** die Konfigurationskennung (41, 42) eine Parametrierung "Anhängerbetrieb" und/oder "Kupplungssteuermodul an den digitalen Bus angeschlossen" enthält oder dadurch gebildet ist und/oder dass die Konfigurationskennung (30) ein Vorhandensein des Kraftfahrzeugbusmoduls (30) und/oder der Anhängekupplung (10) oder beiden bei dem mindestens einen Kraftfahrzeugbusmodul (90) anmeldet oder definiert und/oder dass die Konfiguration-Busnachricht (N3) dazu vorgesehen und/oder ausgestaltet ist, das mindestens eine Kraftfahrzeugbusmodul (90) auf einen Anhängerbetrieb und/oder auf eine Kommunikation mit dem Kupplungssteuermodul (30) einzustellen.

14. Verfahren zum Einbinden eines Kupplungssteuermoduls (30) einer Anhängekupplung (10) in ein Bordnetz (86) eines Kraftfahrzeugs (80), wobei anhand der Anhängekupplung (10) ein Anhänger (180) an das Kraftfahrzeug (80) angehängt werden kann, wobei das Kupplungssteuermodul (30) mindestens eine elektrische Funktion der Anhängekupplung (10) ansteuert und/oder überwacht, wobei das Kupplungssteuermodul (30) eine Busschnittstelle (36) zur Verbindung mit einem digitalen Bus (85), insbesondere einem CAN-Bus, des Bordnetzes (86) des Kraftfahrzeugs (80) aufweist, wobei das Kupplungssteuermodul (30) über die Busschnittstelle (36) Busnachrichten (SN, M) an mindestens ein an den Bus (85) angeschlossenes Kraftfahrzeugbusmodul (90) des Kraftfahrzeugs (80) senden und Busnachrichten (SN, M) des mindestens einen Kraftfahrzeugbusmoduls (90) empfangen kann, **gekennzeichnet durch** Senden mindestens einer Konfiguration-Busnachricht (N3) an das mindestens eine Kraftfahrzeugbusmodul (90) über die Busschnittstelle (36) durch das Kupplungssteuermodul (30), wobei die Konfiguration-Busnachricht (N3) eine Konfigurationskennung (41, 42) zum Eintragen in Konfigurationsdaten (95) des Kraftfahrzeugbusmoduls (90) enthält, wobei die Konfigurationskennung (41, 42) dafür vorgesehen ist, dass das mindestens eine Kraftfahrzeugbusmodul (90) beim Weiterbetrieb des Kraftfahrzeugs (80) anhand der erhaltenen Konfigurationskennung (41, 42) mindestens eine Funktion in Abhängigkeit von dem Vorhandensein der Anhängekupplung (10) und/oder von dem Kupplungssteuermodul (30) erhaltenen Busnachrichten (SN, M) ausführen kann.

15. Computerprogrammprodukt mit Programmcode zur Durchführung des Verfahrens nach Anspruch 14, wenn das Computerprogramm in einen Computer und/oder ein Kupplungssteuermodul geladen und von dem Computer oder einem Prozessor des Kupplungssteuermoduls ausgeführt wird.

## Claims

1. Coupling control module (30) for a trailer coupling (10) for connection to a vehicle electrical system (86) of a motor vehicle (80), wherein a trailer (180) can be coupled to the motor vehicle (80) by means of the trailer coupling (10), wherein the coupling control module (30) actuates and/or monitors at least one electrical function of the trailer coupling (10), wherein the coupling control module (30) has a bus interface (36) for connection to a digital bus (85), in particular a CAN bus, of the vehicle electrical system (86) of the motor vehicle (80), wherein the coupling control module (30) can send bus messages (SN, M) via the bus interface (36) to at least one motor vehicle bus module (90) of the motor vehicle (80) connected to the digital bus (85) and can receive bus messages (SN, M) from at least one motor vehicle bus module (90), **characterised in that** the coupling control module (30) is configured for sending at least one configuration bus message (N3) to the at least one motor vehicle bus module (90) via the bus interface (36), wherein the configuration bus message (N3) contains a configuration identifier (41, 42) to be entered into configuration data (95) of the motor vehicle bus module (90), wherein the configuration identifier (41, 42) is provided for enabling the at least one motor vehicle bus module (90) to carry out at least one function depending on the presence of the trailer coupling (10) and/or depending on bus messages (SN, M) received from the coupling control module (30) by means of the received configuration identifier (41, 42) while the motor vehicle (80) continues to be operated.

2. Coupling control module (30) according to claim 1, **characterised in that** the configuration identifier (41, 42) is provided for the at least one motor vehicle bus module (90) to evaluate control bus messages (SN) and/or signal bus messages (M) from the coupling control module (30) and/or so that the at least one motor vehicle bus module (90) is enabled and/or ready for communication with the coupling control module (30) and/or so that the at least one motor vehicle bus module (90), in a function as a gateway, forwards these to at least one further motor vehicle bus module (90E, 90F) or vehicle control module connected to the motor vehicle bus module (90), in particular via the bus (85).

3. Coupling control module (30) according to claim 1 or 2, **characterised in that** the control bus messages (SN) and/or signal bus messages (M) contain at least one usage information (N19), which signals a use of the trailer coupling (10) by a trailer (180) coupled to the motor vehicle (80), in particular a use of a trailer socket (19) of the trailer coupling (10).

4. Coupling control module (30) according to any one of the preceding claims, **characterised in that** it is configured to receive a configuration information bus message (N2) from the at least one motor vehicle bus module (90), wherein the configuration information bus message (N2) contains information as to whether the configuration identifier (41, 42) is contained in the configuration data (95) of the at least one motor vehicle bus module (90), and/or that the coupling control module (30) sends the configuration bus message (N3) to the at least one motor vehicle bus module (90) depending on whether the configuration identifier (41, 42) is included in its configuration data (95).

5. Coupling control module (30) according to any one of the preceding claims, **characterised in that** it is configured to send a query bus message (N1) via the digital bus (85) of the motor vehicle (80), with which the coupling control module (30) queries the configuration information bus message (N2) in the at least one motor vehicle bus module (90) and/or a plurality of motor vehicle bus modules (90) connected to the bus (85).

6. Coupling control module (30) according to any one of the preceding claims, **characterised in that** it is configured to send the configuration bus message (N3) only after querying and/or reception of the configuration information bus message (N2) from the at least motor vehicle bus module (90), and/or that the configuration bus message (N3), apart from the configuration identifier (41, 42), contains no information for outputting to an output means of the motor vehicle (80) and/or for controlling the at least one motor vehicle bus module (90).

7. Coupling control module (30) according to any one of the preceding claims, **characterised in that** said coupling control module (30) is configured for transmitting the configuration bus message (N3) as a function of at least one temporal condition, in particular in predetermined or adjustable time cycles, and/or as a function of at least one trigger event, in particular of a respective start-up of the motor vehicle (80), in particular a start-up of a drive motor of the motor vehicle (80), and/or a first power supply of the coupling control module (30) and/or an actuation of a brake (82A) of the motor vehicle (80) and/or a switching of at least one lamp (87A, 186A) of the motor vehicle (80) or the trailer (180) and/or an electrical trigger signal and/or a trigger bus message (TB), and or as a function of a predetermined switching sequence or operating sequence of an electrical functional element, wherein it is advantageously provided, that it has at least one manually operable electrical operating switch (45) for generating the trigger signal or trigger event.

8. Coupling control module (30) according to any one of the preceding claims, **characterised in that** it is configured for connection to an onboard diagnostic interface (89) of the motor vehicle (80) and/or has an interface (37), in particular a plug connector (43), for connection to an onboard diagnostic interface (89).

9. Coupling control module (30) according to any one of the preceding claims, **characterised in that** it has a parameterisation interface (35) for parameterising the configuration identifier (41, 42) and/or the at least one motor vehicle bus module (90) has identifying data and/or data relevant to and standing in connection with the transmission of the configuration identifier (41, 42), and/or that it is configured to send switching information (PI) to the at least one motor vehicle bus module (90), wherein the motor vehicle bus module (90) can be switched to a parameterisation mode by means of the switching information (PI), in which mode the motor vehicle bus module (90) is enabled to parameterise the configuration identifier (41, 42).

10. Coupling control module (30) according to any one of the preceding claims, **characterised in that** it is configured to send at least one acceptance information (Al) for authentication and/or identification in the at least one motor vehicle bus module (90), wherein the motor vehicle bus module (90) accepts the configuration identifier (41, 42) as a function of the acceptance information (Al) into its configuration data (95).

11. Coupling control module (30) according to any one of the preceding claims, **characterised in that** it has coupling means or an interface (32) for coupling a trailer socket (19), which is provided for plugging a connector (185) of the trailer (180), to the vehicle electrical system (86) of the motor vehicle (80) and/or control means or an interface (31) for controlling at least one electric drive (17, 18), in particular a drive (17) of a fixing device (16) for fixing the trailer coupling (10) in at least one operating position, in particular a use position (G) and/or a non-use position (N), and/or a drive (18) for adjusting a coupling arm (14) of the trailer coupling (10) between a use position (G) provided for attaching the trailer (180) and a non-use position (N) provided when the coupling arm (14) is not in use, in particular concealed behind a bumper (84) of the motor vehicle (80).

12. Coupling control module (30) according to any one of the preceding claims, **characterised in that** it has output means (44) for outputting a message, in particular an optical and/or acoustic message, until it has sent the configuration identifier (41, 42) to the at least one motor vehicle bus module (90) after a first start-up and/or that it is configured for determining that at least one motor vehicle bus module (90) of the motor vehicle (80) has not received the configuration identifier (41, 42), by means of monitoring a bus communication to the bus (85) of the motor vehicle (80).

13. Coupling control module (30) according to any one of the preceding claims, **characterised in that** the configuration identifier (41, 42) contains or is formed by a parameterisation "trailer operation" and/or "coupling control module connected to the digital bus" and/or **in that** the configuration identifier (30) declares or defines the presence of the motor vehicle bus module (30) and/or the trailer coupling (10) or both with the at least one motor vehicle bus module (90) and/or that the configuration bus message (N3) is provided and/or configured to set the at least one motor vehicle bus module (90) to trailer operation and/or communication with the coupling control module (30).

14. Method for integrating a coupling control module (30) of a trailer coupling (10) into a vehicle electrical system (86) of a motor vehicle (80), wherein a trailer (180) can be attached to the motor vehicle (80) by means of the trailer coupling (10), wherein the coupling control module (30) controls and/or monitors at least one electrical function of the trailer coupling (10), wherein the coupling control module (30) has a bus interface (36) for connection to a digital bus (85), in particular a CAN bus, of the vehicle electrical system (86) of the motor vehicle (80), wherein the coupling control module (30) can send bus messages (SN, M) via the bus interface (36) to at least one motor vehicle bus module (90) of the motor vehicle (80) connected to the bus (85) and can receive bus messages (SN, M) from the at least one motor vehicle bus module (90), **characterised by** sending at least one configuration bus message (N3) to the at least one motor vehicle bus module (90) via the bus interface (36) through the coupling control module (30), wherein the configuration bus message (N3) contains a configuration identifier (41, 42) to be entered into configuration data (95) of the motor vehicle bus module (90), wherein the configuration identifier (41, 42) is provided for enabling the at least one motor vehicle bus module (90) to carry out at least one function depending on the presence of the trailer coupling (10) and/or depending on bus messages (SN, M) received from the coupling control module (30) by means of the received configuration identifier (41, 42) while the motor vehicle (80) continues to be operated.

15. Computer program product with program code for performing the method according to Claim 14, when the computer program is loaded into a computer and/or a coupling control module and executed by the computer or a processor of the coupling control module.

## Revendications

1. Module de commande d'attelage (30) pour un attelage de remorque (10) destiné à être raccordé à un réseau de bord (86) d'un véhicule à moteur (80), dans lequel une remorque (180) peut être attelée au véhicule à moteur (80) à l'aide de l'attelage de remorque (10), dans lequel le module de commande d'attelage (30) pilote et/ou surveille au moins une fonction électrique de l'attelage de remorque (10), dans lequel le module de commande d'attelage (30) présente une interface de bus (36) destinée à être reliée à un bus numérique (85), en particulier à un bus CAN, du réseau de bord (86) du véhicule à moteur (80), dans lequel le module de commande d'attelage (30) peut par l'intermédiaire de l'interface de bus (36) envoyer des messages de bus (SN, M) à au moins un module de bus de véhicule à moteur (90), raccordé au bus numérique (85), du véhicule à moteur (80) et recevoir des messages de bus (SN, M) de l'au moins un module de bus de véhicule à moteur (90), **caractérisé en ce que** le module de commande d'attelage (30) est configuré pour envoyer au moins un message de bus de configuration (N3) à l'au moins un module de bus de véhicule à moteur (90) par l'intermédiaire de l'interface de bus (36), dans lequel le message de bus de configuration (N3) contient un identifiant de configuration (41, 42) destiné à être enregistré dans des données de configuration (95) du module de bus de véhicule à moteur (90), dans lequel l'identifiant de configuration (41, 42) est prévu pour que l'au moins un module de bus de véhicule à moteur (90) puisse exécuter, lors de la poursuite du fonctionnement du véhicule à moteur (80), à l'aide de l'identifiant de configuration (41, 42) reçu, au moins une fonction en fonction de la présence de l'attelage de remorque (10) et/ou de messages de bus (SN, M) reçus du module de commande d'attelage (30).

2. Module de commande d'attelage (30) selon la revendication 1, **caractérisé en ce que** l'identifiant de configuration (41, 42) est prévu pour que l'au moins un module de bus de véhicule à moteur (90) évalue des messages de bus de commande (SN) et/ou des messages de bus de notification (M) du module de commande d'attelage (30), et/ou que l'au moins un module de bus de véhicule à moteur (90) est activé et/ou se tient prêt pour une communication avec le module de commande d'attelage (30), et/ou que l'au moins un module de bus de véhicule à moteur (90) procède au transfert dans une fonction en tant qu'une passerelle à au moins un autre module de bus de véhicule à moteur (90E, 90F) ou module de commande de véhicule à moteur relié au module de bus de véhicule à moteur (90) en particulier par l'intermédiaire du bus (85).

3. Module de commande d'attelage (30) selon la revendication 1 ou 2, **caractérisé en ce que** les messages de bus de commande (SN) et/ou messages de bus de notification (M) contiennent au moins une information d'utilisation (N19), qui signale une utilisation de l'attelage de remorque (10) par une remorque (180) accouplée au véhicule à moteur (80), en particulier une utilisation d'une prise de courant de remorque (19) de l'attelage de remorque (10).

4. Module de commande d'attelage (30) selon l'une quelconque des revendications précédentes, **caractérisé en ce qu'**il est configuré pour recevoir un message de bus d'information de configuration (N2) de l'au moins un module de bus de véhicule à moteur (90), dans lequel le message de bus d'information de configuration (N2) contient une information sur la question de savoir si l'identifiant de configuration (41, 42) est contenu dans les données de configuration (95) de l'au moins un module de bus de véhicule à moteur (90), et/ou que le module de commande d'attelage (30) envoie le message de bus de configuration (N3) à l'au moins un module de bus de véhicule à moteur (90) en fonction de la question de savoir si l'identifiant de configuration (41, 42) est contenu dans ses données de configuration (95).

5. Module de commande d'attelage (30) selon l'une quelconque des revendications précédentes, **caractérisé en ce qu'**il est configuré pour envoyer un message de bus de consultation (N1) par l'intermédiaire du bus numérique (85) du véhicule à moteur (80), avec lequel le module de commande d'attelage (30) consulte le message de bus d'information de configuration (N2) pour l'au moins un module de bus de véhicule à moteur (90) et/ou les plusieurs modules de bus de véhicule à moteur (90) raccordés au bus (85).

6. Module de commande d'attelage (30) selon l'une quelconque des revendications précédentes, **caractérisé en ce qu'**il est configuré pour expédier le message de bus de configuration (N3) seulement après une consultation et/ou réception du message de bus d'information de configuration (N2) de l'au moins un module de bus de véhicule à moteur (90), et/ou que le message de bus de configuration (N3) ne contient, abstraction faite de l'identifiant de configuration (41, 42), aucune information destinée à être émise à un moyen d'émission du véhicule à moteur (80) et/ou destinée au pilotage de l'au moins un module de bus de véhicule à moteur (90).

7. Module de commande d'attelage (30) selon l'une quelconque des revendications précédentes, **caractérisé en ce qu'**il est configuré pour envoyer le message de bus de configuration (N3) en fonction d'au moins une condition de temps, en particulier selon des cycles temporels prédéfinis ou réglables, et/ou d'au moins un événement déclencheur, en particulier d'une mise en service respective du véhicule à moteur (80), en particulier d'un démarrage d'un moteur d'entraînement du véhicule à moteur (80), et/ou d'une alimentation en courant pour la première fois du module de commande d'attelage (30) et/ou d'un actionnement d'un frein (82A) du véhicule à moteur (80) et/ou d'une commutation d'au moins un feu (87A, 186A) du véhicule à moteur (80) ou de la remorque (180) et/ou d'un signal déclencheur électrique et/ou d'un message de bus déclencheur (TB), et ou en fonction d'une séquence de commutation ou d'utilisation prédéfinie d'un élément fonctionnel électrique, dans lequel il est avantageusement prévu que le module de commande d'attelage (30) présente au moins un commutateur d'utilisation (45) électrique pouvant être actionné manuellement pour générer le signal déclencheur ou l'événement déclencheur.

8. Module de commande d'attelage (30) selon l'une quelconque des revendications précédentes, **caractérisé en ce qu'**il est configuré pour être relié à une interface de diagnostic embarquée (89) du véhicule à moteur (80) et/ou présente une interface (37), en particulier un connecteur enfichable (43), destinée à être reliée à une interface de diagnostic embarquée (89).

9. Module de commande d'attelage (30) selon l'une quelconque des revendications précédentes, **caractérisé en ce qu'**il présente une interface de paramétrage (35) pour paramétrer l'identifiant de configuration (41, 42) et/ou l'au moins un module de bus de véhicule à moteur (90) de données caractéristiques et/ou concernées et en lien avec l'expédition de l'identifiant de configuration (41, 42), et/ou qu'il est configuré pour envoyer une information de commutation (PI) à l'au moins un module de bus de véhicule à moteur (90), dans lequel le module de bus de véhicule à moteur (90) peut être commuté à l'aide de l'information de commutation (PI) dans un mode de paramétrage, dans lequel le module de bus de véhicule à moteur (90) est activé pour paramétrer l'identifiant de configuration (41, 42).

10. Module de commande d'attelage (30) selon l'une quelconque des revendications précédentes, **caractérisé en ce qu'**il est configuré pour envoyer au moins une information d'admission (AI) pour l'authentification et/ou l'identification pour l'au moins un module de bus de véhicule à moteur (90), dans lequel le module de bus de véhicule à moteur (90) reprend l'identifiant de configuration (41, 42) en fonction de l'information d'admission (AI) dans ses données de configuration (95).

11. Module de commande d'attelage (30) selon l'une quelconque des revendications précédentes, **caractérisé en ce qu'**il présente des moyens de couplage ou une interface (32) pour l'accouplement d'une prise de courant de remorque (19), qui est prévue pour attacher un connecteur enfichable (185) de la remorque (180), au réseau de bord (86) du véhicule à moteur (80) et/ou présente des moyens de commande ou une interface (31) pour le pilotage d'au moins un entraînement électrique (17, 18), en particulier d'un entraînement (17) d'un système de blocage (16) pour bloquer l'attelage de remorque (10) dans au moins une position de fonctionnement, en particulier dans une position d'utilisation (G) et/ou dans une position de non-utilisation (N), et/ou d'un entraînement (18) pour ajuster un bras d'attelage (14) de l'attelage de remorque (10) entre une position d'utilisation (G) prévue pour atteler la remorque (180) et une position de non-utilisation (N) prévue pour une non-utilisation du bras d'attelage (14), en particulier dissimulée derrière un pare-chocs (84) du véhicule à moteur (80).

12. Module de commande d'attelage (30) selon l'une quelconque des revendications précédentes, **caractérisé en ce qu'**il présente des moyens d'émission (44) pour une émission d'une notification, en particulier d'une notification optique et/ou acoustique, jusqu'à ce qu'il ait envoyé, après une première mise en service, l'identifiant de configuration (41, 42) à l'au moins un module de bus de véhicule à moteur (90), et/ou qu'il est configuré pour déterminer qu'au moins un module de bus de véhicule à moteur (90) du véhicule à moteur (80) n'a pas reçu l'identifiant de configuration (41, 42), à l'aide d'une surveillance d'une communication de bus sur le bus (85) du véhicule à moteur (80).

13. Module de commande d'attelage (30) selon l'une quelconque des revendications précédentes, **caractérisé en ce que** l'identifiant de configuration (41, 42) contient un paramétrage « mode remorque » et/ou « module de commande d'attelage raccordé au bus numérique » ou est formé de celui-ci, et/ou que l'identifiant de configuration (30) signale une présence du module de bus de véhicule à moteur (30) et/ou de l'attelage de remorque (10) ou des deux pour l'au moins un module de bus de véhicule à moteur (90), et/ou que le message de bus de configuration (N3) est prévu et/ou configuré pour régler l'au moins un module de bus de véhicule à moteur (90) sur un mode remorque et/ou sur une communication avec le module de commande d'attelage (30).

14. Procédé d'intégration d'un module de commande d'attelage (30) d'un attelage de remorque (10) dans un réseau de bord (86) d'un véhicule à moteur (80), dans lequel une remorque (180) peut être attelée au véhicule à moteur (80) à l'aide de l'attelage de remorque (10), dans lequel le module de commande d'attelage (30) pilote et/ou surveille au moins une fonction électrique de l'attelage de remorque (10), dans lequel le module de commande d'attelage (30) présente une interface de bus (36) destinée à être reliée à un bus numérique (85), en particulier un bus CAN, du réseau de bord (86) du véhicule à moteur (80), dans lequel le module de commande d'attelage (30) peut par l'intermédiaire de l'interface de bus (36), envoyer des messages de bus (SN, M) à au moins un module de bus de véhicule à moteur (90) raccordé au bus (85), du véhicule à moteur (80) et recevoir des messages de bus (SN, M) de l'au moins un module de bus de véhicule à moteur (90), **caractérisé par** l'envoi d'au moins un message de bus de configuration (N3) à l'au moins un module de bus de véhicule à moteur (90) par l'intermédiaire de l'interface de bus (36) par le module de commande d'attelage (30), dans lequel le message de bus de configuration (N3) contient un identifiant de configuration (41, 42) destiné à être enregistré dans des données de configuration (95) du module de bus de véhicule à moteur (90), dans lequel l'identifiant de configuration (41, 42) est prévu pour que l'au moins un module de bus de véhicule à moteur (90) puisse exécuter, lors de la poursuite du fonctionnement du véhicule à moteur (80), à l'aide de l'identifiant de configuration (41, 42) reçu, au moins une fonction en fonction de la présence de l'attelage de remorque (10) et/ou de messages de bus (SN, M) reçus du module de commande d'attelage (30).

15. Produit de programme informatique avec un code de programme pour mettre en oeuvre le procédé selon la revendication 14 quand le programme informatique est chargé dans un ordinateur et/ou un module de commande d'attelage et est exécuté par l'ordinateur ou un processeur du module de commande d'attelage.
